# EUROPEAN PATENT SPECIFICATION

(11) **EP 3 282 667 B1**
(45) Date of publication and mention of the grant of the patent: **30.11.2022**
(21) Application number: 16795855.2
(22) Date of filing: 13.05.2016
(51) Int. Cl.: H04L 45/64

(54) **GENERATING A VNF FOR AUTHORIZING SERVICE**
GENERIEREN EINER VNF ZUR AUTORISIERUNG EINES DIENSTES
GÉNÉRER UNE VNF POUR AUTORISER UN SERVICE

(30) Priority: 16.05.2015 CN 201510251450
(43) Date of publication of application: 14.02.2018
(73) Proprietor: Huawei Technologies Co., Ltd., Longgang District Shenzhen, Guangdong 518129 (CN)
(72) Inventor: XU, Weiping, Shenzhen Guangdong 518129 (CN); ZHA, Min, Shenzhen Guangdong 518129 (CN); LI, Hongyu, Shenzhen Guangdong 518129 (CN)
(74) Representative: Goddar, Heinz J.
(86) International application number: PCT/CN2016/082068
(87) International publication number: WO 2016/184368

(56) References cited:
- WO-A1-2015/029416
- CN-A- 103 607 349
- CN-A- 104 219 127
- CN-A- 104 219 127
- CN-A- 104 243 301
- CN-A- 104 243 301
- US-A1- 2012 281 698
- US-A1- 2014 169 215
- US-A1- 2014 317 261
- US-A1- 2014 337 500
- US-A1- 2015 106 812
- US-A1- 2015 124 586
- VILALTA RICARD ET AL: "Transport Network Function Virtualization", JOURNAL OF LIGHTWAVE TECHNOLOGY, IEEE SERVICE CENTER, NEW YORK, NY, US, vol. 33, no. 8, 15 April 2015 (2015-04-15) , pages 1557-1564, XP011575138, ISSN: 0733-8724, DOI: 10.1109/JLT.2015.2390655 [retrieved on 2015-03-09]
- RIGGIO ROBERTO ET AL: "Virtual network functions orchestration in enterprise WLANs", 2015 IFIP/IEEE INTERNATIONAL SYMPOSIUM ON INTEGRATED NETWORK MANAGEMENT (IM), IEEE, 11 May 2015 (2015-05-11), pages 1220-1225, XP033167959, DOI: 10.1109/INM.2015.7140470 [retrieved on 2015-06-29]
- YANG YU ET AL: "A framework of using OpenFlow to handle transient link failure", TRANSPORTATION, MECHANICAL, AND ELECTRICAL ENGINEERING (TMEE), 2011 INTERNATIONAL CONFERENCE ON, IEEE, 16 December 2011 (2011-12-16), pages 2050-2053, XP032181226, DOI: 10.1109/TMEE.2011.6199619 ISBN: 978-1-4577-1700-0

## Description

### TECHNICAL FIELD

The present invention relates to the communications field, and in particular, to a method and system for authorizing a service of a user, and an apparatus.

### BACKGROUND

With development of network function virtualization (Network Function Virtualization, NFV) technologies, a service subscribed by a user may be implemented by using a virtualized network function (virtualized network function, VNF), and the service subscribed by the user may be rapidly deployed, modified, or deleted. The service subscribed by the user may be a firewall service, a network address translation (Network Address Translation, NAT) service, or the like.

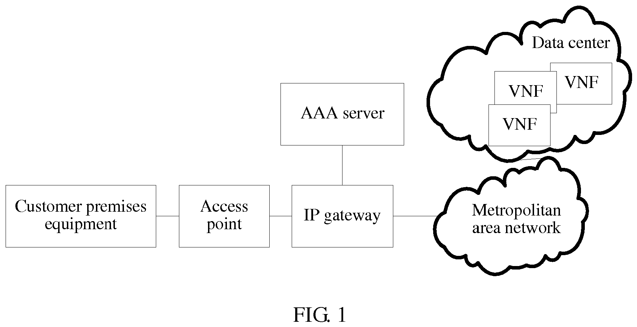

A broadband system shown in FIG. 1 may include a customer premises equipment (customer premises equipment, CPE), an access node (access node), an authentication, authorization and accounting (Authentication, Authorization, Accounting, AAA) server, an Internet Protocol (Internet Protocol, IP) gateway, a metropolitan area network, and a data center (data center, DC). The DC includes multiple VNFs. The VNFs in the DC may be used to implement a function of the IP gateway or another function corresponding to a service, for example, a VNF used to implement a firewall and a VNF used to implement NAT.

Currently, a VNF in a DC cannot differentiate users. For example, an IP gateway may learn, according to information about authorization performed by an AAA server on a first user, that the first user subscribes to a firewall service. The IP gateway may further learn, according to information about authorization performed by the AAA server on a second user, that the second user subscribes to a NAT service. The IP gateway sends traffic of the first user and traffic of the second user to the VNF in the DC by using a gateway of the DC. Because the VNF in the DC cannot differentiate users, data of multiple users is sent to one VNF. The VNF needs to process a relatively large amount of data, but another VNF in the DC is in an idle state, causing relatively low VNF resource utilization in the DC. The multiple users include a user who does not subscribe to a service corresponding to the VNF. Therefore, VNF working efficiency is relatively low.

CN 104243301A discloses that a method comprises a PCE receives a PCReq message sent by a PCC. The PCReq message comprising NFV function demand information; and the PCE generating a service path according to a VFVDB, an NFV function entity conforming to the NFV function demand information is on the service path.

WO2015/029416 A1 discloses that a communication apparatus for performing communications via communication paths established in a network comprises: a communication path identification unit that can identify the communication path to which a received packet belongs; and a switch unit that can transfer the received packet to a network node associated with the communication path to which the received packet belongs, said network node being included in a plurality of network nodes that can terminate communication paths.

US 2012/281698 A1 discloses that a network switches that are controlled by a controller server may contain ports through which network packets are received and forwarded. An architect may configure the Controller Server to create virtual switches. Each virtual switch may be formed from a subset of the ports of the network switches. The architect may assign administrators to the virtual switches. An administrator may use a command line interface to configure a virtual switch. The administrator may use commands such as a show port command, an access list command, a show access list command, and a membership rule command to manage the virtual switch. The controller server may prevent the administrator from logging on to virtual switches that have been assigned to other administrators.

### SUMMARY

Embodiments of the present invention provide a method and system for authorizing a service of a user, and an apparatus, to effectively improve resource utilization and working efficiency of a VNF. The invention is defined by the independent claims. Moreover, advantageous embodiments are disclosed in the dependent claims.

According to the method and system for authorizing a service of a user, and the apparatus that are provided in the embodiments of the present invention, after obtaining service information, a first controller sends a first request that includes the service information to a second controller. The first controller instructs, by sending the first request, the second controller to generate a VNF corresponding to the service information. After receiving a first response that includes an identifier of a transport network and that is sent by the second controller, the first controller sends, to a third controller, a second request that includes an identifier of a user, an identifier of a first gateway, and the identifier of the transport network. The first controller instructs, by sending the second request, the third controller to configure a path used to transmit data. In this way, the second controller that is configured to manage a VNF can generate, according to the service information sent by the first controller, the VNF corresponding to a service subscribed by the user. The first controller may deliver, to the first gateway by using the third controller, the identifier of the transport network corresponding to the VNF. In this way, the first gateway can send traffic of the user to the VNF according to the identifier of the transport network. That is, data of a user who subscribes to the service can be transmitted to the VNF corresponding to the service information, effectively improving VNF resource utilization.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention.
FIG. 1 is a schematic structural diagram of a broadband system in the prior art;
FIG. 2 is a flowchart of a method for authorizing a service of a user according to an embodiment of the present invention;
FIG. 3 is a flowchart of a method for authorizing a service of a user according to an embodiment of the present invention;
FIG. 4 is a flowchart of a method for authorizing a service of a user according to an embodiment of the present invention;
FIG. 5 is a flowchart of a method for authorizing a service of a user according to an embodiment of the present invention;
FIG. 6 is a flowchart of a method for authorizing a service of a user according to an embodiment of the present invention;
FIG. 7 is a schematic structural diagram of an NFV broadband system according to an embodiment of the present invention;
FIG. 8 is a flowchart of a method for authorizing a service of a user according to an embodiment of the present invention;
FIG. 9 is a schematic structural diagram of a Syslog message format according to an embodiment of the present invention;
FIG. 10(a) is a flowchart of a method for authorizing a service of a user according to an embodiment of the present invention;
FIG. 10(b) is a flowchart of a method for authorizing a service of a user according to an embodiment of the present invention;
FIG. 11 is a flowchart of a method for authorizing a service of a user according to an embodiment of the present invention;
FIG. 12(a) is a flowchart of a method for authorizing a service of a user according to an embodiment of the present invention;
FIG. 12(b) is a flowchart of a method for authorizing a service of a user according to an embodiment of the present invention;
FIG. 13 is a flowchart of a method for authorizing a service of a user according to an embodiment of the present invention;
FIG. 14 is a schematic structural diagram of a first controller according to an embodiment of the present invention;
FIG. 15 is a schematic structural diagram of a first controller according to an embodiment of the present invention;
FIG. 16 is a schematic structural diagram of a first controller according to an embodiment of the present invention;
FIG. 17 is a schematic structural diagram of a second controller according to an embodiment of the present invention;
FIG. 18 is a schematic structural diagram of a second controller according to an embodiment of the present invention;
FIG. 19 is a schematic structural diagram of a third controller;
FIG. 20 is a schematic structural diagram of a generation unit of a third controller ;
FIG. 21 is a schematic structural diagram of a sending unit of a third controller;
FIG. 22 is a schematic structural diagram of a first gateway according to an embodiment of the present invention;
FIG. 23 is a schematic structural diagram of a first gateway according to an embodiment of the present invention;
FIG. 24 is a schematic structural diagram of a first gateway according to an embodiment of the present invention;
FIG. 25 is a schematic structural diagram of a first gateway according to an embodiment of the present invention;
FIG. 26 is a schematic diagram of a system for authorizing a service of a user according to an embodiment of the present invention;
FIG. 27 is a schematic structural diagram of a first controller according to an embodiment of the present invention;
FIG. 28 is a schematic structural diagram of a second controller according to an embodiment of the present invention;
FIG. 29 is a schematic structural diagram of a third controller;
FIG. 30 is a schematic structural diagram of a first gateway according to an embodiment of the present invention;
FIG. 31 is a schematic structural diagram of a first gateway according to an embodiment of the present invention; and
FIG. 32 is a schematic diagram of a system for authorizing a service of a user according to an embodiment of the present invention.

### DESCRIPTION OF EMBODIMENTS

The following clearly and completely describes the technical solutions in the embodiments of the present invention with reference to accompanying drawings in the embodiments of the present invention.

### Embodiment 1

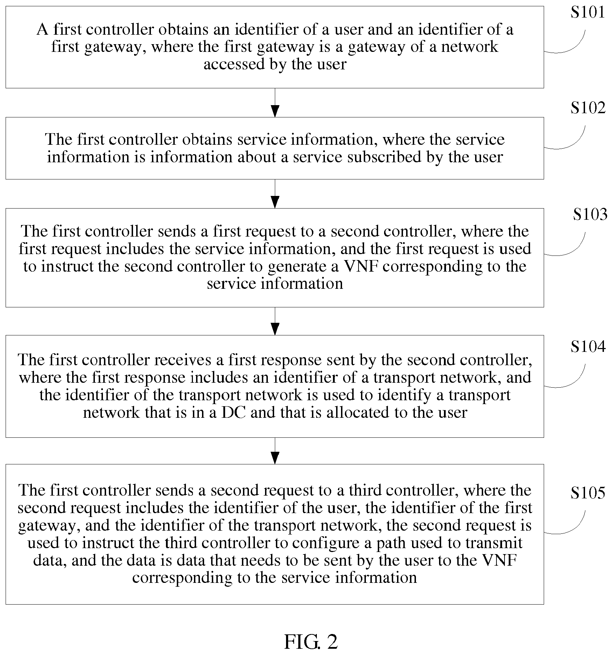

In Embodiment 1, a method provided in this embodiment of the present invention is described from a side of a first controller. The first controller may be disposed in a coordinator, an orchestrator (orchestrator), or an operations support system (operations support system, OSS). This embodiment of the present invention provides a method for authorizing a service of a user. As shown in FIG. 2, the method includes the following steps.

S101. A first controller obtains an identifier of a user and an identifier of a first gateway, where the first gateway is a gateway of a network accessed by the user.

For example, the first controller may periodically access a preset server to obtain a first correspondence. The first correspondence includes the identifier of the user and the identifier of the first gateway. The first controller may obtain the identifier of the user and the identifier of the first gateway from the first correspondence. Alternatively, the first controller receives an external instruction, and accesses a preset server according to the external instruction, to obtain a first correspondence. The first correspondence includes the identifier of the user and the identifier of the first gateway. The first controller may obtain the identifier of the user and the identifier of the first gateway from the first correspondence.

For example, the first controller may further obtain the identifier of the user and the identifier of the first gateway from a notification message sent by the first gateway. The notification message includes the identifier of the user and the identifier of the first gateway. Alternatively, the first controller may further obtain the identifier of the user and the identifier of the first gateway from a first authentication request sent by the first gateway. The first authentication request includes the identifier of the user and the identifier of the first gateway. The first controller may receive the notification message or the authentication request directly sent by the first gateway. Alternatively, the first controller may receive the notification message or the authentication request forwarded by a third controller. That is, the first gateway sends the notification message or the authentication request to the third controller, and the third controller forwards the notification message or the authentication request to the first controller.

S102. The first controller obtains service information, where the service information is information about a service subscribed by the user.

For example, the notification message that is sent by the first gateway and that is received by the first controller further includes the service information, and the first controller may obtain the service information from the notification message. Alternatively, the first controller prestores a second correspondence, and the second correspondence includes the service information and the identifier of the user. The first controller obtains the service information according to the identifier of the user and the second correspondence. Alternatively, the first controller may obtain the service information from an authentication success response that is sent by an AAA server to the first gateway. The authentication success response includes the service information.

For example, the first controller may interact with the AAA server before S102, and obtain the identifier of the user and the service information from the AAA server. The first controller generates the second correspondence according to the identifier of the user and the service information. Interaction between the first controller and the AAA server may comply with a protocol determined by negotiation. Details are not described herein. Alternatively, before S102, the first controller may receive the identifier of the user and the service information that are sent by the first gateway. The first controller generates the second correspondence according to the identifier of the user and the service information.

S103. The first controller sends a first request to a second controller, where the first request includes the service information, and the first request is used to instruct the second controller to generate a VNF corresponding to the service information.

For example, the first controller may prestore an identifier of the second controller, and the identifier of the second controller may be information such as an IP address of the second controller or a number of the second controller. The first controller may send the first request to the second controller according to the identifier of the second controller.

For example, the first request may be generated by the first controller, or may be generated by a device that can interact with the first controller. Examples are not given one by one herein for illustration. The VNF corresponding to the service information is a VNF that can process the service subscribed by the user.

S104. The first controller receives a first response sent by the second controller, where the first response includes an identifier of a transport network, and the identifier of the transport network is used to identify a transport network that is in a DC and that is allocated to the user.

For example, the first response is used to notify the first controller of an identifier of a user network that is in the DC and that is of the VNF corresponding to the service information. The user network that is in the DC and that is of the VNF is a network identified by the identifier of the transport network.

Optionally, the first response further includes an identifier of a second gateway. The identifier of the second gateway may be information such as an IP address of the second gateway or a number of the second gateway. Examples are not given one by one herein for illustration. The second gateway is a gateway included in the DC.

S105. The first controller sends a second request to a third controller, where the second request includes the identifier of the user, the identifier of the first gateway, and the identifier of the transport network, the second request is used to instruct the third controller to configure a path used to transmit data, and the data is data that needs to be sent by the user to the VNF corresponding to the service information.

Optionally, the second request that is sent by the first controller to the third controller may further include the identifier of the second gateway. That is, the second request includes the identifier of the user, the identifier of the first gateway, the identifier of the second gateway, and the identifier of the transport network.

After S105, the method provided in this embodiment of the present invention further includes: the first controller receives a second response sent by the third controller. The second response is used to instruct the first controller to complete configuration of the path. The second response may include the identifier of the user. Alternatively, the second response includes the identifier of the user and the identifier of the first gateway. Alternatively, the second response includes the identifier of the user, the identifier of the first gateway, and the identifier of the transport network.

According to the method provided in this embodiment of the present invention, a first controller obtains an identifier of a user, an identifier of a first gateway, and service information. The first controller sends, to a second controller, a first request that includes the service information, and instructs the second controller to generate a VNF corresponding to the service information. After receiving a first response that includes an identifier of a transport network and that is sent by the second controller, the first controller sends, to a third controller, a second request that includes the identifier of the user, the identifier of the first gateway, and the identifier of the transport network, and instructs the third controller to configure a path used to transmit data. In this way, a user who subscribes to a service can establish a correspondence with the VNF corresponding to the service information, and data of the user who subscribes to the service can be transmitted to the corresponding VNF, effectively improving VNF resource utilization.

### Embodiment 2

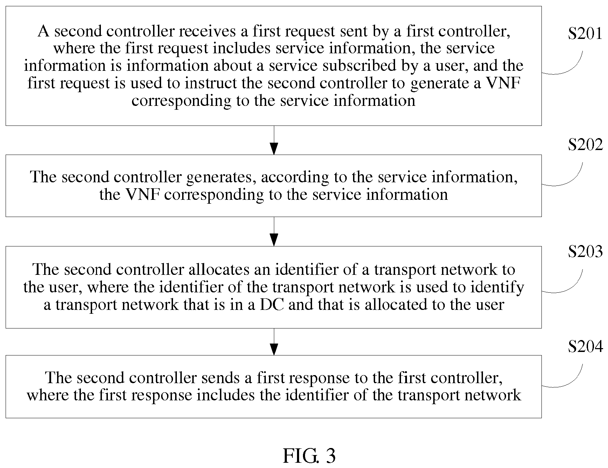

In Embodiment 2, a method provided in this embodiment of the present invention is described from a side of a second controller. The second controller may be configured to generate a VNF and manage the generated VNF. The second controller may also be referred to as a VNF controller. This embodiment of the present invention provides a method for authorizing a service of a user. As shown in FIG. 3, the method includes the following steps.

S201. A second controller receives a first request sent by a first controller, where the first request includes service information, the service information is information about a service subscribed by a user, and the first request is used to instruct the second controller to generate a VNF corresponding to the service information.

The first request in Embodiment 2 is the same as the first request in Embodiment 1. Details are not repeatedly described herein.

S202. The second controller generates, according to the service information, the VNF corresponding to the service information.

For example, the second controller may instantiate a VNF resource according to the service information, to generate the VNF. The instantiating a VNF resource is allocating a physical resource to the service corresponding to the service information, for example, allocating a physical CPU resource. The second controller may generate the VNF by using a common method. Details are not described herein.

S203. The second controller allocates an identifier of a transport network to the user, where the identifier of the transport network is used to identify a transport network that is in a DC and that is allocated to the user.

For example, the second controller may select an idle transport network from the DC, and allocate the idle transport network to the user. Alternatively, the second controller may allocate the transport network to the user according to a preset configuration policy and according to the service information. Details are not described herein.

S204. The second controller sends a first response to the first controller, where the first response includes the identifier of the transport network.

The first response in Embodiment 2 is the same as the first response in Embodiment 1. Details are not repeatedly described herein.

Optionally, if the DC includes multiple gateways, and VNFs with which the gateways can communicate are not the same, after S202, the method further includes: the second controller obtains an identifier of a gateway according to the VNF, where the gateway is a second gateway, that is, a gateway of the DC to which the VNF belongs; and the second controller further sends the identifier of the gateway to the first controller by using the first response. If the DC includes only one gateway, and the gateway can communicate with all VNFs in the DC, after S201, the method further includes: the second controller obtains an identifier of a gateway of the DC; and the second controller further sends the identifier of the gateway of the DC to the first controller by using the first response.

According to the method provided in this embodiment of the present invention, a second controller receives a first request that includes service information and that is sent by a first controller. The second controller generates, according to the service information, a VNF corresponding to the service information. The second controller sends, to the first controller, a first response that includes an identifier of a transport network allocated to a user. This helps a user who subscribes to a service establish a correspondence with the VNF corresponding to the service information, so that data of the user who subscribes to the service can be transmitted to the corresponding VNF, effectively improving VNF resource utilization.

### Example 3

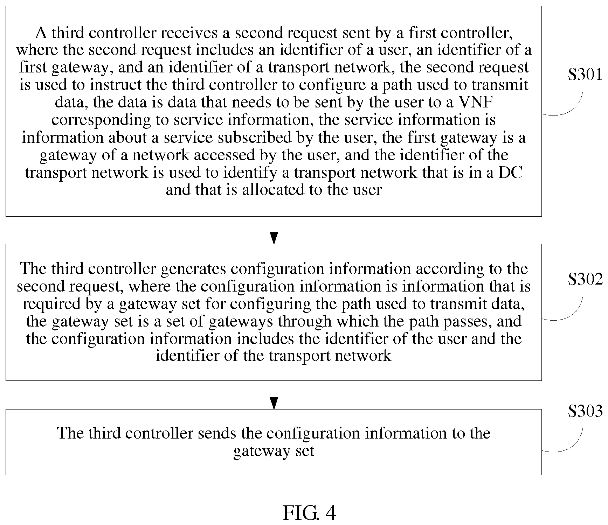

In an example 3, which is helpful for understanding the invention, a method is described from a side of a third controller. In example 3, a first controller can manage and/or control the third controller and a second controller. The third controller can manage and/or control a first gateway, or can manage and/or control a first gateway and a second gateway. The second controller is the second controller in Embodiment 2. This embodiment of the present invention provides a method for authorizing a service of a user. As shown in FIG. 4, the method includes the following steps.

S301. A third controller receives a second request sent by a first controller, where the second request includes an identifier of a user, an identifier of a first gateway, and an identifier of a transport network, the second request is used to instruct the third controller to configure a path used to transmit data, the data is data that needs to be sent by the user to a VNF corresponding to service information, the service information is information about a service subscribed by the user, the first gateway is a gateway of a network accessed by the user, and the identifier of the transport network is used to identify a transport network that is in a DC and that is allocated to the user.

The second request in example 3 is the same as the second request in Embodiment 1. Details are not repeatedly described herein.

S302. The third controller generates configuration information according to the second request, where the configuration information is information that is required by a gateway set for configuring the path used to transmit data, the gateway set is a set of gateways through which the path passes, and the configuration information includes the identifier of the user and the identifier of the transport network.

For example, the gateway set may include only the first gateway, or include the first gateway and a second gateway. The second gateway is a gateway of the DC.

If the gateway set includes only the first gateway, that the third controller generates the configuration information according to the second request includes: the third controller generates the configuration information according to the identifier of the user and the identifier of the transport network that are included in the second request. Correspondingly, the path is a path between the first gateway and the VNF corresponding to the service information, for example, a tunnel between the first gateway and the VNF corresponding to the service information. A source address of the tunnel is the identifier of the first gateway, and a destination address of the tunnel is the identifier of the transport network.

Optionally, the configuration information may further include an identifier of the path, to help identify a path used by the user.

Optionally, the configuration information may further include a parameter such as a type of the path. Examples are not given one by one herein for illustration.

Optionally, the second request further includes an identifier of the second gateway, and the configuration information further includes the identifier of the second gateway. The configuration information includes first configuration information and second configuration information. If the gateway set includes the first gateway and the second gateway, that the third controller generates the configuration information according to the second request includes: the third controller generates the first configuration information according to the identifier of the user and the identifier of the second gateway that are included in the second request, where the first configuration information is information that is required by the first gateway for configuring a first subpath, and the first subpath is a path that is between the first gateway and the second gateway and that is used to transmit the data; and the third controller generates the second configuration information according to the identifier of the transport network that is included in the second request, where the second configuration information is information that is required by the second gateway for configuring a second subpath, the second subpath is a path that is between the second gateway and the VNF and that is used to transmit the data, and the path includes the first subpath and the second subpath.

Optionally, the first configuration information may further include the identifier of the first gateway and/or the identifier of the path. The second configuration information may further include at least one of the identifier of the first gateway, the identifier of the second gateway, or the identifier of the path.

S303. The third controller sends the configuration information to the gateway set.

For example, if the gateway set includes only the first gateway, that the third controller sends the configuration information to the gateway set includes: the third controller sends the configuration information to the first gateway according to the identifier that is of the first gateway and that is included in the second request.

For example, if the gateway set includes the first gateway and the second gateway, that the third controller sends the configuration information to the gateway set includes: the third controller sends the first configuration information to the first gateway according to the identifier that is of the first gateway and that is included in the second request; and the third controller sends the second configuration information to the second gateway according to the identifier that is of the second gateway and that is included in the second request.

For example, the third controller may add the second configuration information to a message or a packet. The third controller may deliver the second configuration information to the second gateway by using the message or the packet that carries the second configuration information. A destination address of the message or the packet that carries the second configuration information may be an IP address of the second gateway, and the IP address of the second gateway may be the identifier of the second gateway. In this way, the second gateway may obtain the identifier of the second gateway from the message or the packet that carries the second configuration information.

According to the method provided in this embodiment of the present invention, a third controller receives a second request that includes an identifier of a user, an identifier of a first gateway, and an identifier of a transport network and that is sent by a first controller. The third controller generates configuration information according to the second request. The third controller sends the configuration information to a gateway set. The gateway set is a set of gateways through which a path passes. For example, the gateway set includes only the first gateway, or the gateway set includes the first gateway and a second gateway. In this way, a gateway included in the gateway set can establish, according to the configuration information, a path used to transmit user data, so that data of a user who subscribes to a service can be transmitted to a corresponding VNF, effectively improving VNF resource utilization.

### Embodiment 4

In Embodiment 4, a method provided in this embodiment of the present invention is described from a side of a first gateway. The first gateway may be an IP gateway, for example, a broadband network gateway (broadband network gateway, BNG), a service router (service router, SR), a broadband remote access server (broadband remote access server, BRAS), or a broadband access server (broadband access server, BAS). A second controller in Embodiment 4 is the third controller in example 3, and a first controller in Embodiment 4 is the first controller in Embodiment 1. The second controller is configured to manage and/or control the first gateway.

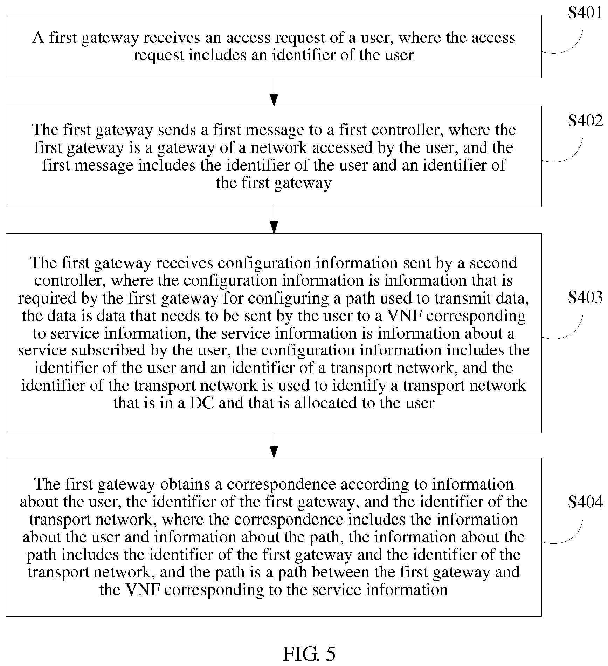

This embodiment of the present invention provides a method for authorizing a service of a user. As shown in FIG. 5, the method includes the following steps.

S401. A first gateway receives an access request of a user, where the access request includes an identifier of the user.

For example, the access request of the user is used to request, from the first gateway, to access a network. The network that the user requests to access is a network in which the first gateway is located, such as a metropolitan area network, or may be a network of another type. Details are not described herein. After receiving the access request of the user, the first gateway may learn that the user is in an online state.

S402. The first gateway sends a first message to a first controller, where the first gateway is a gateway of a network accessed by the user, and the first message includes the identifier of the user and an identifier of the first gateway.

For example, the first message is a notification message, the notification message includes the identifier of the user and the identifier of the first gateway, and the notification message is used to notify the first controller that the user accesses the network. Alternatively, the first message is an authentication request, the authentication request includes the identifier of the user and the identifier of the first gateway, and the authentication request is used to request an AAA server to authenticate an identity of the user.

S403. The first gateway receives configuration information sent by a second controller, where the configuration information is information that is required by the first gateway for configuring a path used to transmit data, the data is data that needs to be sent by the user to a virtualized network function VNF corresponding to service information, the service information is information about a service subscribed by the user, the configuration information includes the identifier of the user and an identifier of a transport network, and the identifier of the transport network is used to identify a transport network that is in a data center DC and that is allocated to the user.

For example, the configuration information may be carried in a packet or a message, and a destination address of the packet or the message that carries the configuration information may be an address of the first gateway. If the identifier of the first gateway is an IP address of the first gateway, the destination address of the packet or the message that carries the configuration information may be the identifier of the first gateway. In this way, the first gateway may obtain the identifier of the first gateway from the destination address of the packet or the message that carries the configuration information.

Optionally, the configuration information may further include the identifier of the first gateway.

S404. The first gateway obtains a correspondence according to information about the user, the identifier of the first gateway, and the identifier of the transport network, where the correspondence includes the information about the user and information about the path, the information about the path includes the identifier of the first gateway and the identifier of the transport network, and the path is a path between the first gateway and the VNF corresponding to the service information.

For example, the first gateway may obtain the identifier of the user and the identifier of the transport network from the configuration information. The first gateway may obtain the identifier of the first gateway from the packet or the message that carries the configuration information. The first gateway generates the correspondence according to the information about the user, the identifier of the first gateway, and the identifier of the transport network.

Optionally, if the configuration information further includes the identifier of the first gateway, the first gateway may obtain the information about the user, the identifier of the first gateway, and the identifier of the transport network from the configuration information. The first gateway generates the correspondence according to the information about the user, the identifier of the first gateway, and the identifier of the transport network.

Optionally, if the configuration information further includes an identifier of the path, that the first gateway obtains the correspondence includes: the first gateway obtains the identifier of the path, the identifier of the user, and the identifier of the transport network from the configuration information; the first gateway obtains the identifier of the first gateway from the packet or the message that carries the configuration information; and the first gateway generates the correspondence according to the identifier of the path, the identifier of the user, the identifier of the first gateway, and the identifier of the transport network. The correspondence includes the identifier of the path, the identifier of the user, the identifier of the first gateway, and the identifier of the transport network. After S404, the method provided in this embodiment of the present invention further includes: the first gateway receives a packet from the user, where the packet from the user includes the identifier of the user and the data that needs to be sent by the user to the VNF corresponding to the service information; the first gateway obtains the information about the path according to the identifier of the user and the correspondence; and the first gateway sends the packet from the user to the VNF according to the information about the path by using the path.

According to the method provided in this embodiment of the present invention, after receiving an access request of a user, a first gateway sends, to a first controller, a first message that includes an identifier of the user and an identifier of the first gateway. The first gateway receives configuration information that includes the identifier of the user and an identifier of a transport network and that is sent by a second controller. The first gateway obtains, according to information about the user, the identifier of the first gateway, and the identifier of the transport network, a correspondence that includes the information about the user and information about a path. In this way, the first gateway can establish a path used to transmit user data, so that data of a user who subscribes to a service can be transmitted to a corresponding VNF, effectively improving VNF resource utilization.

### Embodiment 5

In Embodiment 5, a method provided in this embodiment of the present invention is described from a side of a first gateway. The first gateway may be an IP gateway. For a specific example, refer to Embodiment 4. A second controller in Embodiment 5 is the third controller in example 3, and a first controller in Embodiment 5 is the first controller in Embodiment 1. The second controller is configured to manage and/or control the first gateway and a second gateway.

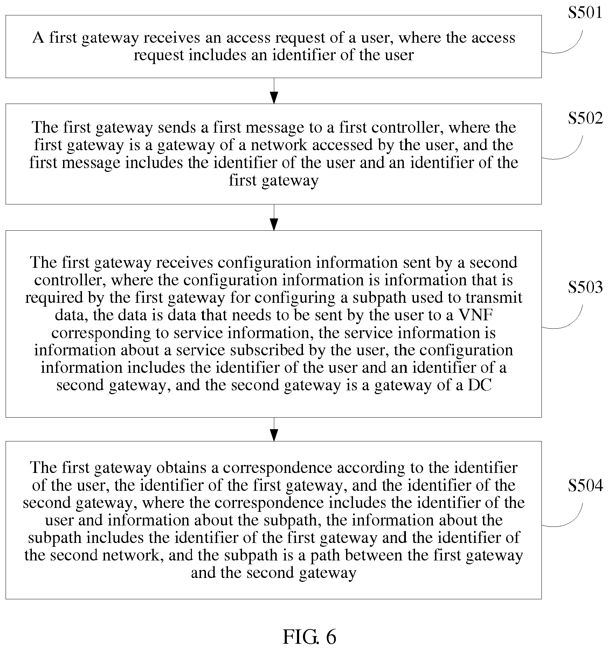

This embodiment of the present invention provides a method for authorizing a service of a user. As shown in FIG. 6, the method includes the following steps.

S501. A first gateway receives an access request of a user, where the access request includes an identifier of the user.

S501 in Embodiment 5 is the same as S401 in Embodiment 4. Details are not repeatedly described herein.

S502. The first gateway sends a first message to a first controller, where the first gateway is a gateway of a network accessed by the user, and the first message includes the identifier of the user and an identifier of the first gateway.

S502 in Embodiment 5 is the same as S402 in Embodiment 4. Details are not repeatedly described herein.

S503. The first gateway receives configuration information sent by a second controller, where the configuration information is information that is required by the first gateway for configuring a subpath used to transmit data, the data is data that needs to be sent by the user to a VNF corresponding to service information, the service information is information about a service subscribed by the user, the configuration information includes the identifier of the user and an identifier of a second gateway, and the second gateway is a gateway of a DC.

The subpath in this embodiment of the present invention is used to transmit the data to the second gateway. The configuration information in Embodiment 5 is the first configuration information in example 3. Details are not repeatedly described herein. The subpath in Embodiment 5 is the first subpath in example 3.

Optionally, the configuration information in this embodiment of the present invention may further include an identifier of a path. The identifier of the path in Embodiment 5 is used to identify a path to which the subpath is belongs, and may be the same as the identifier of the path in Embodiment 4 or the identifier of the path in example 3. Details are not repeatedly described herein.

S504. The first gateway obtains a correspondence according to the identifier of the user, the identifier of the first gateway, and the identifier of the second gateway, where the correspondence includes the identifier of the user and information about the subpath, the information about the subpath includes the identifier of the first gateway and the identifier of the second gateway, and the subpath is a path between the first gateway and the second gateway.

For example, the identifier that is of the first gateway and that is used by the first gateway to generate the correspondence may be from a message or a packet that carries the configuration information. Alternatively, the identifier of the first gateway may be included in the configuration information, that is, the first gateway may obtain the identifier of the first gateway by using the method in Embodiment 4. Details are not repeatedly described herein.

Optionally, if the configuration information further includes the identifier of the path, the correspondence generated by the first gateway further includes the identifier of the path.

After S504, the method provided in this embodiment of the present invention further includes: the first gateway receives a packet from the user, where the packet from the user includes the identifier of the user and the data that needs to be sent by the user to the VNF corresponding to the service information; the first gateway obtains the information about the subpath according to the identifier of the user and the correspondence; and the first gateway sends the packet from the user to the second gateway according to the information about the subpath by using the subpath.

According to the method provided in this embodiment of the present invention, after receiving an access request of a user, a first gateway sends, to a first controller, a first message that includes an identifier of the user and an identifier of the first gateway. The first gateway receives configuration information that includes the identifier of the user and an identifier of a second gateway and that is sent by a second controller. The first gateway obtains, according to the identifier of the user, the identifier of the first gateway, and the identifier of the second gateway, a correspondence that includes the identifier of the user and information about a subpath. In this way, the first gateway can establish a subpath used to transmit user data, that is, a path between the first gateway and the second gateway, so that data of a user who subscribes to a service can be transmitted to the second gateway, effectively improving VNF resource utilization.

### Embodiment 6

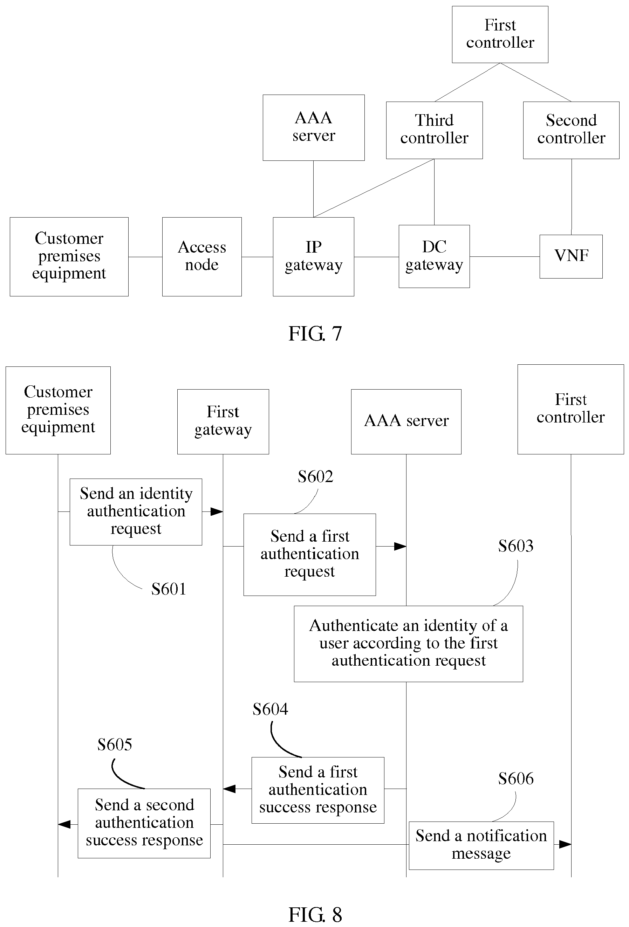

This embodiment of the present invention provides an NFV broadband system. As shown in FIG. 7, the NFV broadband system includes a customer premises equipment, an access node, an AAA server, an IP gateway, a DC gateway, a first controller, a second controller, a third controller, and a VNF. The IP gateway may be a first gateway in any one of the embodiments of the present invention. The DC gateway may be a second gateway in any one of the embodiments of the present invention. A connection relationship between devices included in the system provided in this embodiment of the present invention is shown in FIG. 7.

### Embodiment 7

With reference to the system shown in FIG. 7, the following describes a method provided in Embodiment 7. This embodiment of the present invention provides a method for authorizing a service of a user. As shown in FIG. 8, the method includes the following steps.

S601. A customer premises equipment sends an identity authentication request to a first gateway. For example, the customer premises equipment may send the identity authentication request to the first gateway by using an access node. The identity authentication request includes an identifier of a user.

It should be noted that the identity authentication request is used to request an AAA server to authenticate an identity of the user. The customer premises equipment may send the identity authentication request to the first gateway by using any one of the Dynamic Host Configuration Protocol (Dynamic Host Configuration Protocol, DHCP), the Point-to-Point Protocol over Ethernet (Point to Point Protocol over Ethernet, PPPoE), or the 802.1x protocol. The 802.1x protocol is an access control and authentication protocol based on a client or a server. By using the 802.1x protocol, an unauthorized user or device may be restricted from accessing a local area network (Local Area Network, LAN) or a wireless local area network (Wireless Local Area Networks, WLAN) by using an access port (access port).

S602. The first gateway sends a first authentication request to an AAA server.

For example, the first gateway obtains the identifier of the user from the identity authentication request. The first gateway may send the first authentication request to the AAA server by using the Remote Authentication Dial In User Service (Remote Authentication Dial In User Service, RADIUS) protocol or the Diameter protocol (Diameter Protocol). The first authentication request is used to request the AAA server to authenticate the identity of the user. The first authentication request includes the identifier of the user and an identifier of the first gateway.

S603. The AAA server authenticates an identity of a user according to the first authentication request.

The AAA server may authenticate the identity of the user by using a common authentication method used by the AAA server. Details are not described herein.

S604. The AAA server sends a first authentication success response to the first gateway.

After determining, according to the identifier of the user, that identity authentication for the user succeeds, the AAA server generates the first authentication success response. The AAA server may send the first authentication success response to the first gateway. Specifically, the AAA server may send the first authentication success response to the first gateway by using the RADIUS protocol or the Diameter protocol. The first authentication success response is used to notify the first gateway that identity authentication for the user succeeds.

S605. The first gateway sends a second authentication success response to the customer premises equipment.

The first gateway may send the second authentication success response to the customer premises equipment by using any one of the DHCP, the PPPoE, or the 802.1x protocol. The second authentication success response carries a parameter or identification information used to identify that identity authentication for the user succeeds.

S606. The first gateway sends a notification message to a first controller.

The notification message includes the identifier of the user and the identifier of the first gateway, and the notification message is used to notify the first controller that the user accesses a network. The identifier of the first gateway may be information that can identify the first gateway, for example, an Internet Protocol (internet protocol, IP) address of the first gateway, a sequence number of the first gateway, or a name of the first gateway.

The notification (Notification) message may be directly sent by the first gateway to the first controller. Alternatively, the notification message may be forwarded by a third controller to the first controller. That is, the first gateway sends the notification message to the third controller, and the third controller forwards the notification message to the first controller. The third controller is a device that can manage and/or control the first gateway.

The first gateway may send the notification message to the first controller by using any one of the Network Configuration Protocol (Network Configuration Protocol, NETCONF), the Simple Network Management Protocol (Simple Network Management Protocol, SNMP) Trap, or the System Log (Syslog) protocol.

Specifically, the first gateway may send an event notification (Event Notification) message to the first controller. If the first gateway sends the notification message by using the NETCONF, the first gateway may expand content carried in the event notification, so that the identifier of the user and the identifier of the first gateway can be carried. The content in the event notification may be in a format such as an extensible markup language (Extensible Markup Language, XML) or a JavaScript object notation (JavaScript Object Notation, JSON). The XML is used as an example, and content carried in an extended NETCONF notification is as follows:

```
 <notification>
         <username>an identifier of a user</username>
         <state>a state of the user</state>
         </notification>
```

Optionally, the identifier of the user may be a line ID (Line-ID) or a user name. For example, the user name may be "alice@isp". The Line-ID includes a name of an access node, a box of an access port, a slot of the access port, a port number of the access port, a virtual local area network (Virtual local Area Network, VLAN) number, and the like.

For example, a value of the Line-ID is "DSLAM_010101_VLAN100". DSLAM represents a name of an access node. 01 in 010101 may respectively represent a box of an access port, a slot of the access port, and a port number of the access port. VLAN100 indicates a number of a VLAN to which a user belongs, which is not a transport network in a DC. VLAN100 represents an identifier of a VLAN that is in an access network and that is allocated to the user.

The state of the user is an online state of the user or an offline state of the user. The online state of the user may be represented as "1", and the offline state of the user may be represented as "0". Alternatively, the online state of the user may be represented as "online", and the offline state of the user may be represented as "offline". The online state of the user indicates that the user accesses the network.

If the first gateway sends the notification message by using the SNMP Trap, an object identifier (Object Identifier) and a value in the Trap may be used to carry content in the notification message. The object identifier represents the identifier of the user or the status of the user.

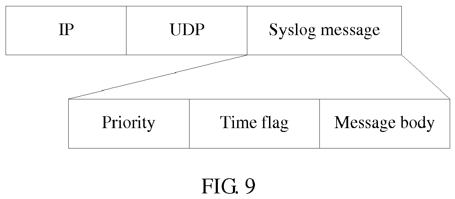

If the first gateway sends the notification message by using the Syslog protocol, content in the notification message may be placed in a message body of a syslog message. As shown in FIG. 9, a syslog message format includes an IP, a User Datagram Protocol (User Datagram Protocol, UDP), and a syslog message. The syslog message includes a priority, a time flag, and a message body. An identifier of a user may be represented as "alice@isp change online".

Optionally, the notification message further includes user-related attributes, such as bandwidth information of the user and physical location information of the user. The bandwidth information of the user may be used to provide, in a path between the first gateway and a VNF corresponding to service information of the user, a transmission channel meeting a bandwidth requirement. The physical location information of the user may be used to provide a location-based service, for example, provide a firewall function when a user accesses a network in a public place.

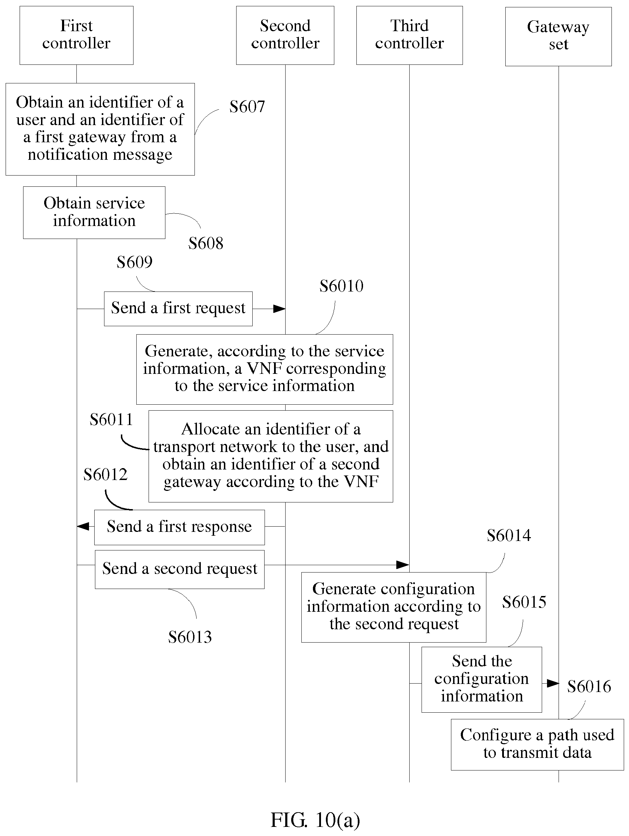

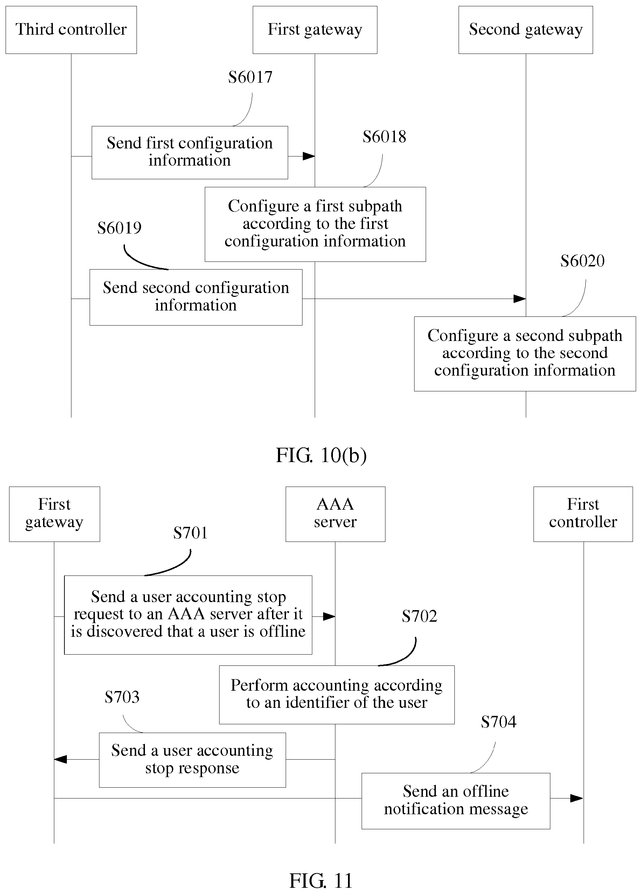

After S606, the method further includes S607 to S6020, that is, S607 to S6016 that are shown in FIG. 10(a) and S6017 to S6020 that are shown in FIG. 10(b).

S607. The first controller obtains an identifier of the user and an identifier of the first gateway from the notification message.

Specifically, the first controller receives the notification message directly sent by the first gateway. Alternatively, the first controller receives the notification message that is sent by the first gateway and that is forwarded by the third controller. The notification message includes the identifier of the user and the identifier of the first gateway, and the notification message is used to notify the first controller that the user accesses the network.

S608. The first controller obtains service information.

The notification message further includes the service information, and the first controller may further obtain the service information from the notification message.

S609. The first controller sends a first request to a second controller.

The first request includes the service information, and the first request is used to instruct the second controller to generate a VNF corresponding to the service information.

It should be noted that, the first controller generates the first request before sending the first request, or the first controller sends, to a server or another network device, information required for generating the first request, and the server or the another network device generates the first request. S6010. The second controller generates, according to the service information, a VNF corresponding to the service information.

The second controller receives the first request sent by the first controller. The first request includes the service information, the service information is information about a service subscribed by the user, and the first request is used to instruct the second controller to generate the VNF corresponding to the service information. The second controller is a controller configured to manage a VNF resource.

The second controller allocates a VNF resource according to the service information, instantiates the VNF resource, and generates the VNF corresponding to the service information. The second controller may generate, by using a common method for generating a VNF, the VNF corresponding to the service information. Details are not described herein.

56011. The second controller allocates an identifier of a transport network to the user, and obtains an identifier of a second gateway according to the VNF

The identifier of the transport network is used to identify a transport network that is in a DC and that is allocated to the user. The transport network is used to transmit a data flow of the user, and may be any one of a virtual extensible local area network (Virtual Extensible LAN, VXLAN), a virtual local area network (Virtual local Area Network, VLAN), or a tunnel. The identifier of the transport network may be a virtual network identifier (VNI) of the virtual extensible local area network (Virtual Extensible LAN, VXLAN) or an identifier (ID) of the virtual local area network (Virtual local Area Network, VLAN). The second gateway is a gateway of the DC to which the VNF belongs.

S6012. The second controller sends a first response to the first controller.

The first response includes the identifier of the transport network.

Optionally, the second controller further sends the identifier of the second gateway to the first controller. That is, the second controller adds the identifier of the second gateway to the first response, and sends the identifier of the second gateway to the first controller by using the first response.

S6013. The first controller sends a second request to a third controller.

The second request includes the identifier of the user, the identifier of the first gateway, and the identifier of the transport network. The second request is used to instruct the third controller to configure a path used to transmit data. The data is data that needs to be sent by the user to the VNF corresponding to the service information. The first gateway is a gateway of a network accessed by the user. The identifier of the transport network is used to identify the transport network that is in the DC and that is allocated to the user. The network accessed by the user may be a metropolitan area network. The transport network is used to transmit a data flow of the user, and may be any one of a virtual extensible local area network (Virtual Extensible LAN, VXLAN), a virtual local area network (Virtual local Area Network, VLAN), or a tunnel.

It should be noted that, the first controller generates the second request before sending the second request, or the first controller sends, to a server or another network device, information required for generating the second request, and the server or the another network device generates the second request.

S6014. The third controller generates configuration information according to the second request.

The configuration information is information that is required by a gateway set for configuring a path used to transmit data. The gateway set is a set of gateways through which the path passes. The configuration information includes the identifier of the user and the identifier of the transport network.

If the gateway set is the first gateway, and the path is a path between the first gateway and the VNF, the third controller generates the configuration information for the first gateway. The configuration information includes the identifier of the user and the identifier of the transport network.

If the second request further includes the identifier of the second gateway, and the configuration information further includes the identifier of the second gateway, that the third controller generates the configuration information according to the second request includes: the third controller generates a first configuration information according to the identifier of the user and the identifier of the second gateway that are included in the second request, where the first configuration information is information that is required by the first gateway for configuring a first subpath, and the first subpath is a path that is between the first gateway and the second gateway and that is used to transmit the data; and the third controller generates a second configuration information according to the identifier of the transport network that is included in the second request, where the second configuration information is information that is required by the second gateway for configuring a second subpath, the second subpath is a path that is between the second gateway and the VNF and that is used to transmit the data, and the path includes the first subpath and the second subpath.

For a method for generating the configuration information by the third controller, refer to example 3. Details are not repeatedly described herein.

If the gateway set is the first gateway, S6015 and S6016 are performed.

S6015. The third controller sends the configuration information to a gateway set.

For example, the third controller sends the configuration information to the first gateway according to the identifier of the first gateway.

S6016. The gateway set configures a path used to transmit data.

If the gateway set is the first gateway, for a method for configuring the path by the first gateway, refer to corresponding content in Embodiment 4.

If the gateway set includes the first gateway and the second gateway, S6017 to S6020 are performed.

S6017. The third controller sends first configuration information to the first gateway.

The third controller may send the first configuration information to the first gateway according to the identifier of the first gateway.

S6018. The first gateway configures a first subpath according to the first configuration information. For a method for configuring the first subpath by the first gateway, refer to corresponding content in Embodiment 5. Details are not repeatedly described herein. Information about the first subpath is content included in tunnel information in Table 1.

A correspondence shown in Table 1 is a correspondence that is generated by the first gateway according to the identifier of the first gateway, the identifier of the user, an identifier of the path, and the identifier of the second gateway. The path is a Generic Routing Encapsulation (Generic Routing Encapsulation, GRE) tunnel.

**Table 1 Information about a first subpath**

| An identifier of a user | Tunnel information | | |
|---|---|---|---|
| | Source address | Destination address | GRE KEY |
| DSLAM_010101_VLAN100 | IP IP gateway | IP DC gateway | 10000 |

The identifier of the user is DSLAM_010101_VLAN100. The first subpath is a path from the first gateway to the second gateway. The IP_IP gateway in Table 1 represents the IP address of the first gateway, and the IP DC gateway in Table 1 represents an IP address of the second gateway. That is, the identifier of the first gateway is the IP address of the first gateway, and the identifier of the second gateway is the IP address of the second gateway. The GRE Key is used to indicate that a tunnel corresponding to the path is a tunnel whose number is 10000. The first gateway receives a packet that carries DSLAM_010101_VLAN100, performs tunnel encapsulation according to the source address and the destination address in Table 1, and sends the packet to the second gateway by using the GRE tunnel whose number is 10000.

It should be noted that a tunnel technology may be GRE, Layer 2 Tunneling Protocol Version 3 (Layer 2 Tunneling Protocol Version 3, L2TPV3), VXLAN, multiprotocol label switching (Multiprotocol Label Switching, MPLS), VPN, or MPLS PW. Each user may correspond to one tunnel, or multiple users correspond to one tunnel to transmit user traffic. For example, a key ID of a GRE tunnel, a session ID of an L2TPV3 tunnel, a VPN ID of an MPLS VPN tunnel, or a VNI of a VXLAN tunnel.

S6019. The third controller sends second configuration information to the second gateway.

The third controller sends the second configuration information to the second gateway according to the identifier of the second gateway.

S6020. The second gateway configures a second subpath according to the second configuration information.

For example, the second configuration information includes the identifier of the first gateway and the identifier of the path. That the second gateway configures the second subpath includes: the second gateway may generate a correspondence according to the second configuration information and the identifier of the second gateway. The correspondence includes information about the second subpath and the identifier of the transport network. The information about the second subpath is content included in tunnel information in Table 2. Certainly, if the second configuration information includes the identifier of the transport network, the correspondence includes the identifier of the second gateway and the identifier of the transport network. The identifier of the second gateway may be from the second configuration information, or may be from a packet or a message that carries the second configuration information. The packet or the message that carries the second configuration information is a packet or a message that is sent by the third controller to the second gateway.

A correspondence shown in Table 2 is a correspondence that is generated by the second gateway according to the identifier of the first gateway, the identifier of the path, the identifier of the second gateway, and the identifier of the transport network. The path is a GRE tunnel.

**Table 2 Information about a second subpath**

| Tunnel information | | | A network in a DC |
|---|---|---|---|
| Source address | Destination address | GRE KEY | VLAN |
| IP IP gateway | IP_DC gateway | 10000 | 200 |

The VLAN in Table 2 represents the identifier of the transport network. The tunnel information in Table 2 is the same as that in Table 1. Details are not repeatedly described herein. After receiving a packet that is obtained after tunnel encapsulation and that is sent by the first gateway (IP gateway), the second gateway (DC gateway) obtains, according to tunnel information such as the source address, the destination address, and/or a GRE key lookup table 2 that is carried in the packet obtained after tunnel encapsulation, information about the VLAN whose value is 200. The second gateway sends the packet from the user to the VNF by using the VLAN whose value is 200 in the DC.

Optionally, after the second gateway and/or the first gateway completes configuration, the third controller may feed back, to the first controller, a response for indicating that configuration is completed. Examples are not given herein for illustration.

### Embodiment 8

For a specific meaning of content that is included in Embodiment 8 and that is the same as that in Embodiment 1 to Embodiment 7, such as an identifier of a user, an identifier of a first gateway, or a notification message, details are not repeatedly described herein. This embodiment of the present invention provides a method for authorizing a service of a user. As shown in FIG. 11, the method includes the following steps.

S701. After discovering that a user is offline, a first gateway sends a user accounting stop request to an AAA server.

After discovering that the user is in an offline state, the first gateway sends the user accounting stop request to the AAA server. The user accounting stop request includes an identifier of the user. The user accounting stop request may be sent by using the RADIUS protocol or the Diameter protocol. S702. The AAA server performs accounting according to an identifier of the user.

S703. The AAA server sends a user accounting stop response to the first gateway.

The user accounting stop response includes the identifier of the user.

S704. The first gateway sends an offline notification message to a first controller.

The offline notification message includes the identifier of the user and an identifier of the first gateway. The offline notification message is used to notify the first controller that the user exits from a network. The identifier of the first gateway may be an IP address of the first gateway.

It should be noted that the offline notification (Notification) message may be directly sent by the first gateway to the first controller. Alternatively, the offline notification message may be forwarded by a third controller to the first controller, that is, the first gateway may first send the offline notification message to the third controller, and then the third controller sends the offline notification message to the first controller.

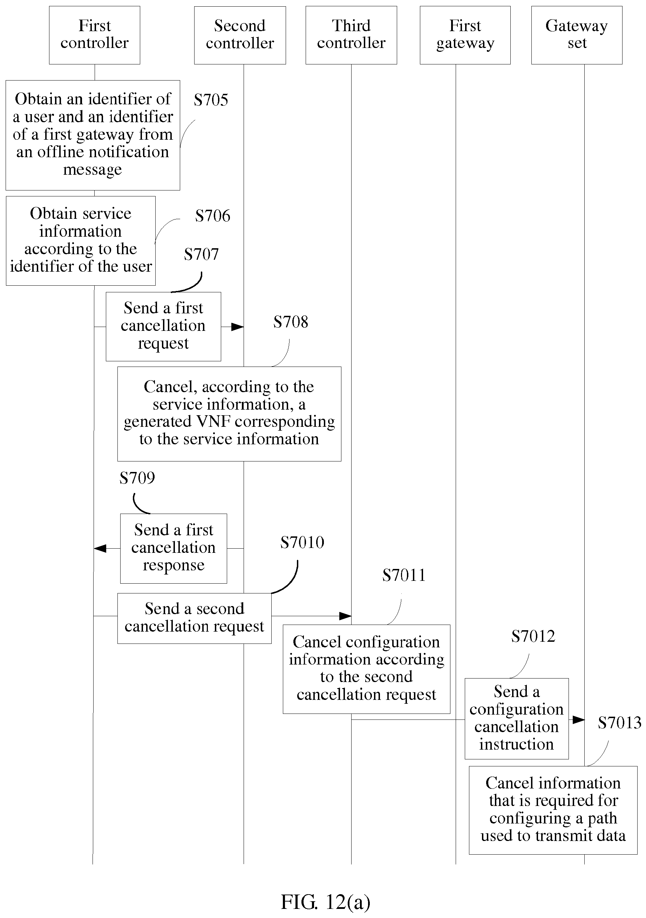

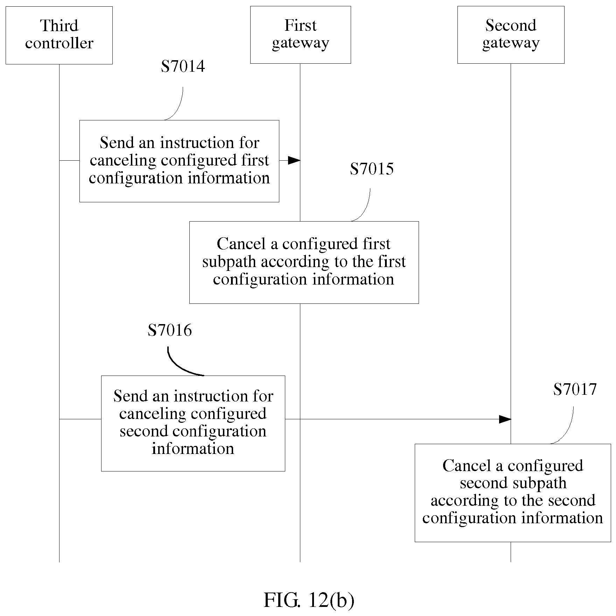

After S704, the method further includes S705 to S7017, that is, S705 to S7013 that are shown in FIG. 12(a) and S7014 to S7017 that are shown in FIG. 12(b).

S705. The first controller obtains the identifier of the user and an identifier of the first gateway from the offline notification message.

A method for obtaining the identifier of the user and the identifier of the first gateway in Embodiment 8 is the same as that in Embodiment 7. Details are not repeatedly described herein. S706. The first controller obtains service information according to the identifier of the user.

The service information is information about a service subscribed by the user. A method for obtaining the service information in Embodiment 8 is the same as that in Embodiment 1 or Embodiment 7. Details are not repeatedly described herein.

S707. The first controller sends a first cancellation request to a second controller.

The first cancellation request includes the service information, and the first cancellation request is used to instruct the second controller to cancel a generated VNF corresponding to the service information.

S708. The second controller cancels, according to the service information, a generated VNF corresponding to the service information.

The second controller receives the first cancellation request sent by the first controller, to obtain the service information.

S709. The second controller sends a first cancellation response to the first controller.

The first cancellation response includes an identifier of a transport network in which data of the service subscribed by the user is transmitted and an identifier of a second gateway.

S7010. The first controller sends a second cancellation request to a third controller.

The second cancellation request includes the identifier of the user, the identifier of the first gateway, the identifier of the transport network in which the data of the service subscribed by the user is transmitted, and the identifier of the second gateway. The second cancellation request is used to instruct the third controller to cancel a configured path used to transmit data, and the data is data that needs to be sent by the user to the VNF corresponding to the service information.

57011. The third controller cancels configuration information according to the second cancellation request.

The third controller receives the second cancellation request sent by the first controller. The second cancellation request includes the identifier of the user, the identifier of the first gateway, and the identifier of the transport network. The second cancellation request is used to instruct the third controller to cancel the configured path used to transmit data, and the data is data that needs to be sent by the user to the VNF corresponding to the service information. The identifier of the transport network is used to identify a transport network that is in a DC and that is allocated to the user. A network accessed by the user may be a metropolitan area network. The transport network is used to transmit a data flow of the user, and may be any one of a virtual extensible local area network (Virtual Extensible LAN, VXLAN), a virtual local area network (Virtual local Area Network, VLAN), or a tunnel.

If a gateway set includes the first gateway and the second gateway, that the third controller cancels configuration information according to the second cancellation request includes: the third controller cancels generated first configuration information according to the identifier of the user and the identifier of the second gateway that are included in the second cancellation request, where the first configuration information is information that is required by the first gateway for configuring a first subpath, and the first subpath is a path that is between the first gateway and the second gateway and that is used to transmit the data; and the third controller cancels generated second configuration information according to the identifier that is of the transport network and that is included in the second cancellation request, where the second configuration information is information that is required by the second gateway for configuring a second subpath, the second subpath is a path that is between the second gateway and the VNF and that is used to transmit the data, and the path includes the first subpath and the second subpath.

If the gateway set is the first gateway, S7012 is performed.

S7012. The third controller sends a configuration cancellation instruction to a gateway set.

The configuration cancellation instruction includes information that is required by the gateway set for configuring the path used to transmit data, that is, includes the identifier of the user and the identifier of the transport network. Specifically, the third controller sends the configuration cancellation instruction to the first gateway.

S7013. The gateway set cancels information that is required for configuring a path used to transmit data.

The gateway set is the first gateway, and the path is a path between the first gateway and the VNF Specifically, according to the configuration cancellation instruction, the first gateway deletes a path correspondence or marks a path correspondence as unavailable. The path correspondence includes the identifier of the user and the identifier of the transport network. Optionally, the path correspondence may further include at least one of the identifier of the first gateway or an identifier of the path.

If the gateway set includes the first gateway and the second gateway, S7014 and S7015 are performed.

S7014. The third controller sends, to the first gateway, an instruction for canceling the configured first configuration information.

The instruction for canceling the configured first configuration information includes the information that is required by the first gateway for configuring the first subpath. The third controller sends, to the first gateway according to the identifier of the first gateway, the instruction for canceling the configured first configuration information.

S7015. The first gateway cancels a configured first subpath according to the first configuration information.

The first subpath in this embodiment is the same as the first subpath in Embodiment 7. Details are not repeatedly described herein. The first gateway may delete all or a part of information in Table 1, or mark Table 1 as unavailable, to cancel the configured first subpath.

**Table 1 Information about a first subpath**

| An identifier of a user | Tunnel information | | |
|---|---|---|---|
| | Source address | Destination address | GRE KEY |
| DSLAM_010101_VLAN100 | IP IP gateway | IP_DC gateway | 10000 |

S7016. The third controller sends, to a second gateway, an instruction for canceling the configured second configuration information.

The instruction for canceling the configured second configuration information includes the information that is required by the second gateway for configuring the second subpath. The third controller sends, to the second gateway according to the identifier of the second gateway, the instruction for canceling the configured second configuration information.

S7017. The second gateway cancels a configured second subpath according to the second configuration information.

The second subpath in this embodiment is the same as the second subpath in Embodiment 7. Details are not repeatedly described herein. The second gateway may delete all or a part of information in Table 2, or mark Table 2 as unavailable, to cancel the configured second subpath.

**Table 2 Information about a second subpath**

| Tunnel information | | | A network in a DC |
|---|---|---|---|
| Source address | Destination address | GRE KEY | VLAN |
| IP IP gateway | IP DC gateway | 10000 | 200 |

Optionally, after the second gateway and/or the first gateway cancels configuration, the third controller may feed back, to the first controller, a response for indicating that configuration is canceled. Examples are not given herein for illustration.

### Embodiment 9

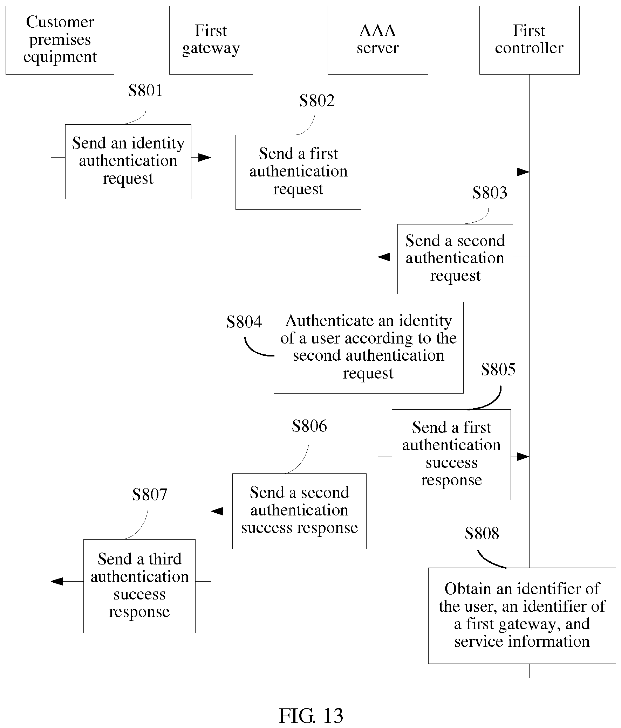

This embodiment of the present invention provides a method for authorizing a service of a user. As shown in FIG. 13, the method includes the following steps.

S801. A customer premises equipment sends an identity authentication request to a first gateway.

The customer premises equipment sends the identity authentication request to the first gateway by using an access node. The identity authentication request includes an identifier of a user. A specific method and detailed content are the same as corresponding content in Embodiment 7. Details are not repeatedly described herein.

S802. The first gateway sends a first authentication request to a first controller.

The first gateway may send the first authentication request to the first controller by using the RADIUS protocol or the Diameter protocol. A specific method and detailed content are the same as corresponding content in Embodiment 4. Details are not repeatedly described herein.

S803. The first controller sends a second authentication request to an AAA server.

The first controller may send the second authentication request to the AAA server by using the RADIUS protocol or the Diameter protocol. The second authentication request is used to request the AAA server to authenticate an identity of the user.

S804. The AAA server authenticates an identity of a user according to the second authentication request.

A specific method and detailed content are the same as content of authenticating an identity of a user by an AAA server in Embodiment 4. Details are not repeatedly described herein.

S805. The AAA server sends a first authentication success response to the first controller.

The AAA server may send the first authentication success response to the first controller by using the RADIUS protocol or the Diameter protocol. The first authentication success response includes service information, the identifier of the user, and information used to indicate that the user accesses a network. The first authentication success response is used to notify the first controller that identity authentication for the user succeeds. A specific method and detailed content are the same as corresponding content in Embodiment 4. Details are not repeatedly described herein.

S806. The first controller sends a second authentication success response to the first gateway.

The first controller may send the second authentication success response to the first gateway by using the RADIUS protocol or the Diameter protocol.

S807. The first gateway sends a third authentication success response to the customer premises equipment.

The first gateway may send the third authentication success response to the customer premises equipment by using any one of the DHCP, the PPPoE, or the 802.1x protocol.

S808. The first controller obtains an identifier of the user, an identifier of the first gateway, and service information.

The first controller obtains the identifier of the user and the identifier of the first gateway from the first authentication request, and obtains the service information from the first authentication success response. Alternatively, the first controller obtains the identifier of the first gateway, the identifier of the user, and the service information from an authentication success response.

In this embodiment of the present invention, S609 to S6020 that are included in Embodiment 7 may be performed after S808. Details are not repeatedly described herein.

According to the method described in the present invention, an AAA server proxy is configured in a first controller; an identifier of a user is obtained by receiving an authentication request sent by a first gateway; an authentication success response sent by an AAA server is received after an authentication request is sent to the AAA server; and information indicating that the user accesses a network is obtained from the authentication success response. This can avoid modifying a protocol in the prior art to obtain an identifier of a user and information indicating that the user accesses a network, and improve commonality of this embodiment of the present invention.

### Embodiment 10

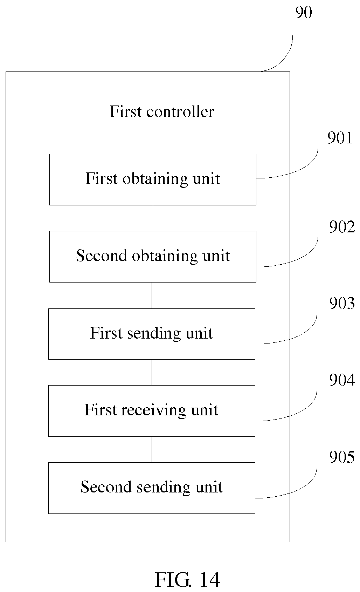

A first controller provided in Embodiment 10 can perform the method provided in Embodiment 1. This embodiment of the present invention provides a first controller 90. As shown in FIG. 14, the first controller 90 includes:
a first obtaining unit 901, configured to obtain an identifier of a user and an identifier of a first gateway, where the first gateway is a gateway of a network accessed by the user;
a second obtaining unit 902, configured to obtain service information, where the service information is information about a service subscribed by the user;
a first sending unit 903, configured to send a first request to a second controller, where the first request includes the service information, and the first request is used to instruct the second controller to generate a virtualized network function VNF corresponding to the service information;
a first receiving unit 904, configured to receive a first response sent by the second controller, where the first response includes an identifier of a transport network, and the identifier of the transport network is used to identify a transport network that is in a data center DC and that is allocated to the user; and
a second sending unit 905, configured to send a second request to a third controller, where the second request includes the identifier of the user, the identifier of the first gateway, and the identifier of the transport network, the second request is used to instruct the third controller to configure a path used to transmit data, and the data is data that needs to be sent by the user to the VNF corresponding to the service information.

The first controller provided in this embodiment of the present invention obtains an identifier of a user, an identifier of a first gateway, and service information. The first controller sends, to a second controller, a first request that includes the service information, and instructs the second controller to generate a VNF corresponding to the service information. After receiving a first response that includes an identifier of a transport network and that is sent by the second controller, the first controller sends, to a third controller, a second request that includes the identifier of the user, the identifier of the first gateway, and the identifier of the transport network, and instructs the third controller to configure a path used to transmit data. In this way, a user who subscribes to a service can establish a correspondence with the VNF corresponding to the service information, and data of the user who subscribes to the service can be transmitted to the corresponding VNF, effectively improving VNF resource utilization.

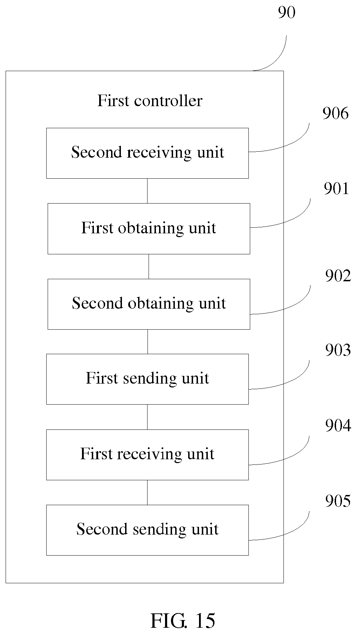

Optionally, the first response further includes an identifier of a second gateway, the second gateway is a gateway of the DC, and the second request further includes the identifier of the second gateway. Optionally, based on FIG. 14, as shown in FIG. 15, the first controller 90 further includes a second receiving unit 906.

The second receiving unit 906 is configured to receive a notification message sent by the first gateway. The notification message includes the identifier of the user and the identifier of the first gateway. The notification message is used to notify the first controller that the user accesses the network.

The first obtaining unit 901 is specifically configured to obtain the identifier of the user and the identifier of the first gateway from the notification message.

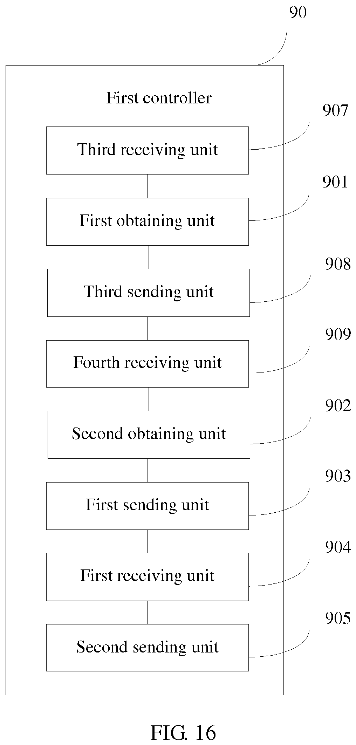

The notification message further includes the service information, and the second obtaining unit 902 is specifically configured to obtain the service information from the notification message. Optionally, based on FIG. 14, as shown in FIG. 16, the first controller 90 further includes a third receiving unit 907.

The third receiving unit 907 is configured to receive a first authentication request sent by the first gateway. The first authentication request includes the identifier of the user and the identifier of the first gateway. The first authentication request is used to request an authentication, authorization and accounting AAA server to authenticate an identity of the user.

The first obtaining unit 901 is specifically configured to obtain the identifier of the user and the identifier of the first gateway from the first authentication request.

Optionally, the first controller 90 further includes:
a third sending unit 908, configured to send a second authentication request to the AAA server, where the second authentication request includes the identifier of the user and the identifier of the first gateway, and the second authentication request is used to request the authentication, authorization and accounting AAA server to authenticate the identity of the user; and
a fourth receiving unit 909, configured to receive an authentication success response sent by the AAA server, where the authentication success response includes the service information, the identifier of the user, and information used to indicate that the user accesses the network, and the authentication success response is used to notify the first gateway that identity authentication for the user succeeds.

The second obtaining unit 902 is specifically configured to obtain the service information from the authentication success response.

For example, the first obtaining unit 901 is specifically configured to obtain a first correspondence from a preset server according to an external instruction or a preset period. The first correspondence includes the identifier of the user and the identifier of the first gateway, and the preset server is configured to store the first correspondence.

The first obtaining unit 901 is specifically configured to obtain the identifier of the user and the identifier of the first gateway from the first correspondence.

The second obtaining unit 902 is specifically configured to obtain the service information according to the identifier of the user and a prestored second correspondence. The second correspondence includes the service information and the identifier of the user.

### Embodiment 11

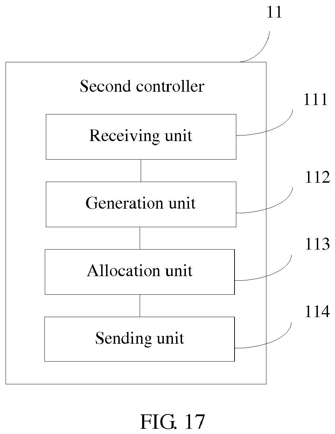

A second controller provided in Embodiment 11 can perform the method provided in Embodiment 2. This embodiment of the present invention provides a second controller 11. As shown in FIG. 17, the second controller 11 includes:
a receiving unit 111, configured to receive a first request sent by a first controller, where the first request includes service information, the service information is information about a service subscribed by a user, and the first request is used to instruct the second controller to generate a virtualized network function VNF corresponding to the service information;
a generation unit 112, configured to generate, according to the service information, the VNF corresponding to the service information;
an allocation unit 113, configured to allocate an identifier of a transport network to the user, where the identifier of the transport network is used to identify a transport network that is in a data center DC and that is allocated to the user; and
a sending unit 114, configured to send a first response to the first controller, where the first response includes the identifier of the transport network.

The second controller provided in this embodiment of the present invention receives a first request that includes service information and that is sent by a first controller. The second controller generates, according to the service information, a VNF corresponding to the service information. The second controller sends, to the first controller, a first response that includes an identifier of a transport network allocated to a user. This helps a user who subscribes to a service establish a correspondence with the VNF corresponding to the service information, so that data of the user who subscribes to the service can be transmitted to the corresponding VNF, effectively improving VNF resource utilization.

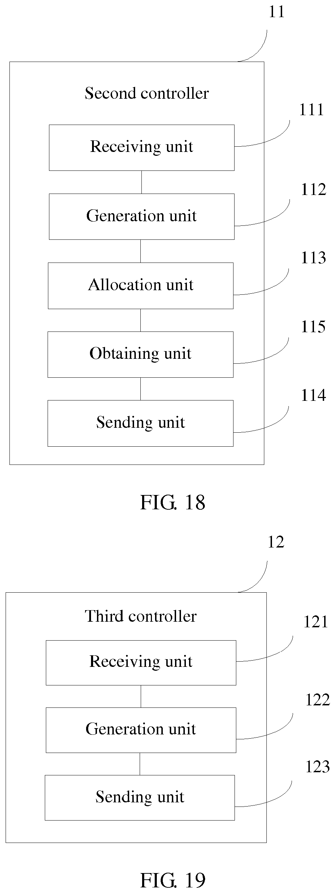

Optionally, as shown in FIG. 18, the second controller 11 further includes:
an obtaining unit 115, configured to obtain an identifier of a gateway according to the VNF, where the gateway is a gateway of the DC to which the VNF belongs.

The sending unit 114 is further configured to send the identifier of the gateway to the first controller by using the first response.

### Example 12

A third controller provided in an example 12 helpful for understanding the invention can perform the method provided in example 3. This example provides a third controller 12. As shown in FIG. 19, the third controller 12 includes:
a receiving unit 121, configured to receive a second request sent by a first controller, where the second request includes an identifier of a user, an identifier of a first gateway, and an identifier of a transport network, the second request is used to instruct the third controller to configure a path used to transmit data, the data is data that needs to be sent by the user to a virtualized network function VNF corresponding to service information, the service information is information about a service subscribed by the user, the first gateway is a gateway of a network accessed by the user, and the identifier of the transport network is used to identify a transport network that is in a data center DC and that is allocated to the user;
a generation unit 122, configured to generate configuration information according to the second request, where the configuration information is information that is required by a gateway set for configuring the path used to transmit data, the gateway set is a set of gateways through which the path passes, and the configuration information includes the identifier of the user and the identifier of the transport network; and
a sending unit 123, configured to send the configuration information to the gateway set.

The third controller provided in this embodiment of the present invention receives a second request that includes an identifier of a user, an identifier of a first gateway, and an identifier of a transport network and that is sent by a first controller. The third controller generates configuration information according to the second request. The third controller sends the configuration information to a gateway set. The gateway set is a set of gateways through which a path passes. For example, the gateway set includes only the first gateway, or the gateway set includes the first gateway and a second gateway. The second gateway is a gateway in a DC. In this way, a gateway included in the gateway set can establish a path used to transmit user data, so that data of a user who subscribes to a service can be transmitted to a corresponding VNF, effectively improving VNF resource utilization.

For example, the gateway set is the first gateway, and the path is a path between the first gateway and the VNF

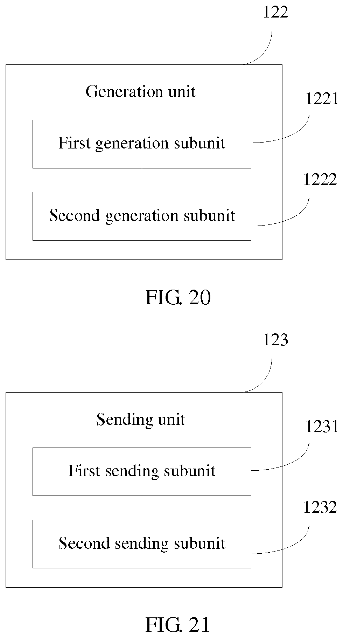

For example, the second request further includes an identifier of a second gateway, the second gateway is a gateway of the DC, and the configuration information includes first configuration information and second configuration information. As shown in FIG. 20, the generation unit 122 includes:
a first generation subunit 1221, configured to generate the first configuration information according to the identifier of the user and the identifier of the second gateway that are included in the second request, where the first configuration information is information that is required by the first gateway for configuring a first subpath, and the first subpath is a path that is between the first gateway and the second gateway and that is used to transmit the data; and
a second generation subunit 1222, configured to generate the second configuration information according to the identifier of the transport network that is included in the second request, where the second configuration information is information that is required by the second gateway for configuring a second subpath, the second subpath is a path that is between the second gateway and
the VNF and that is used to transmit the data, and the path includes the first subpath and the second subpath.

As shown in FIG. 21, the sending unit 123 includes:
a first sending subunit 1231, configured to send the first configuration information to the first gateway; and
a second sending subunit 1232, configured to send the second configuration information to the second gateway.

### Embodiment 13

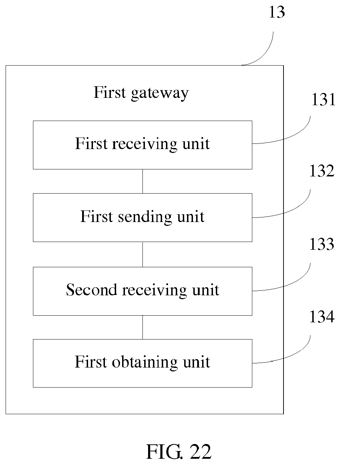

A first gateway provided in Embodiment 13 can perform the method provided in Embodiment 4. A second controller in this embodiment is the third controller in example 3 or example 12. The present invention provides a first gateway 13. As shown in FIG. 22, the first gateway 13 includes:
a first receiving unit 131, configured to receive an access request of a user, where the access request includes an identifier of the user;
a first sending unit 132, configured to send a first message to a first controller, where the first gateway is a gateway of a network accessed by the user, and the first message includes the identifier of the user and an identifier of the first gateway;
a second receiving unit 133, configured to receive configuration information sent by a second controller, where the configuration information is information that is required by the first gateway for configuring a path used to transmit data, the data is data that needs to be sent by the user to a virtualized network function VNF corresponding to service information, the service information is information about a service subscribed by the user, the configuration information includes the identifier of the user and an identifier of a transport network, and the identifier of the transport network is used to identify a transport network that is in a data center DC and that is allocated to the user; and
a first obtaining unit 134, configured to obtain a correspondence according to information about the user, the identifier of the first gateway, and the identifier of the transport network, where the correspondence includes the information about the user and information about the path, the information about the path includes the identifier of the first gateway and the identifier of the transport network, and the path is a path between the first gateway and the VNF corresponding to the service information.

According to the first gateway provided in this embodiment of the present invention, the first gateway receives an access request of a user, where the access request includes an identifier of the user; the first gateway sends, to a first controller, a first message that includes the identifier of the user and an identifier of the first gateway, and receives configuration information that includes the identifier of the user, the identifier of the first gateway, and an identifier of a transport network and that is sent by a second controller; and the first gateway obtains, according to information about the user, the identifier of the first gateway, and the identifier of the transport network, a correspondence that includes the information about the user and information about the path. In this way, the first gateway can establish a path used to transmit user data, so that data of a user who subscribes to a service can be transmitted to a corresponding VNF, effectively improving VNF resource utilization. For example, the first message is a notification message, the notification message includes the identifier of the user and the identifier of the first gateway, and the notification message is used to notify the first controller that the user accesses the network. Alternatively, the first message is an authentication request, the authentication request includes the identifier of the user and the identifier of the first gateway, and the authentication request is used to request an AAA server to authenticate an identity of the user.

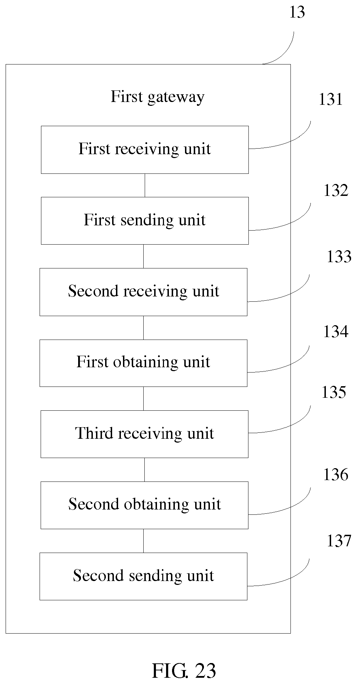

Optionally, as shown in FIG. 23, the first gateway 13 further includes:
a third receiving unit 135, configured to receive a packet from the user, where the packet from the user includes the identifier of the user and the data that needs to be sent by the user to the VNF corresponding to the service information;
a second obtaining unit 136, configured to obtain the information about the path according to the identifier of the user and the correspondence; and
a second sending unit 137, configured to send the packet from the user to the VNF according to the information about the path by using the path.

### Embodiment 14

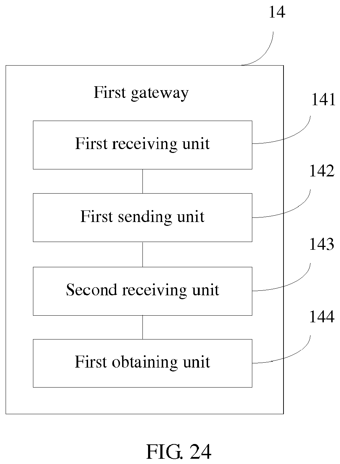

A first gateway provided in Embodiment 14 can perform the method provided in Embodiment 5. A second controller in this embodiment is the third controller in example 3 or example 12. Configuration information in this embodiment is the first configuration information in example 3 or example 12. A subpath in this embodiment is the first subpath in example 3 or example 12. This embodiment of the present invention provides a first gateway 14. As shown in FIG. 24, the first gateway 14 includes:
a first receiving unit 141, configured to receive an access request of a user, where the access request includes an identifier of the user;
a first sending unit 142, configured to send a first message to a first controller, where the first gateway is a gateway of a network accessed by the user, and the first message includes the identifier of the user and an identifier of the first gateway;
a second receiving unit 143, configured to receive configuration information sent by a second controller, where the configuration information is information that is required by the first gateway for configuring a subpath used to transmit data, the data is data that needs to be sent by the user to a virtualized network function VNF corresponding to service information, the service information is information about a service subscribed by the user, the configuration information includes the identifier of the user and an identifier of a second gateway, and the second gateway is a gateway of a data center DC; and
a first obtaining unit 144, configured to obtain a correspondence according to the identifier of the user, the identifier of the first gateway, and the identifier of the second gateway, where the correspondence includes the identifier of the user and information about the subpath, the information about the subpath includes the identifier of the first gateway and the identifier of the second gateway, and the subpath is a path between the first gateway and the second gateway.

According to the first gateway provided in this embodiment of the present invention, the first gateway receives an access request of a user, where the access request includes an identifier of the user; the first gateway sends, to a first controller, a first message that includes the identifier of the user and an identifier of the first gateway, and receives configuration information that includes the identifier of the user, the identifier of the first gateway, and an identifier of a second gateway and that is sent by a second controller; and the first gateway obtains, according to the identifier of the user, the identifier of the first gateway, and the identifier of the second gateway, a correspondence that includes the identifier of the user and information about a subpath. In this way, the first gateway can establish a path used to transmit user data, so that data of a user who subscribes to a service can be transmitted to a corresponding VNF, effectively improving VNF resource utilization. For example, the first message is a notification message, the notification message includes the identifier of the user and the identifier of the first gateway, and the notification message is used to notify the first controller that the user accesses the network. Alternatively, the first message is an authentication request, the authentication request includes the identifier of the user and the identifier of the first gateway, and the authentication request is used to request an authentication, authorization and accounting AAA server to authenticate an identity of the user.

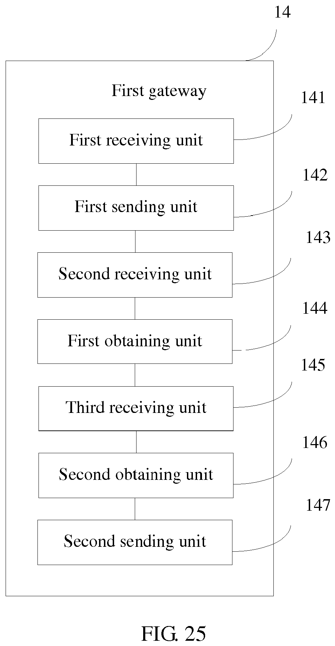

Optionally, as shown in FIG. 25, the first gateway 14 further includes:
a third receiving unit 145, configured to receive a packet from the user, where the packet from the user includes the identifier of the user and the data that needs to be sent by the user to the VNF corresponding to the service information;
a second obtaining unit 146, configured to obtain the information about the subpath according to the identifier of the user and the correspondence; and
a second sending unit 147, configured to send the packet from the user to the second gateway according to the information about the subpath by using the subpath.

### Embodiment 15

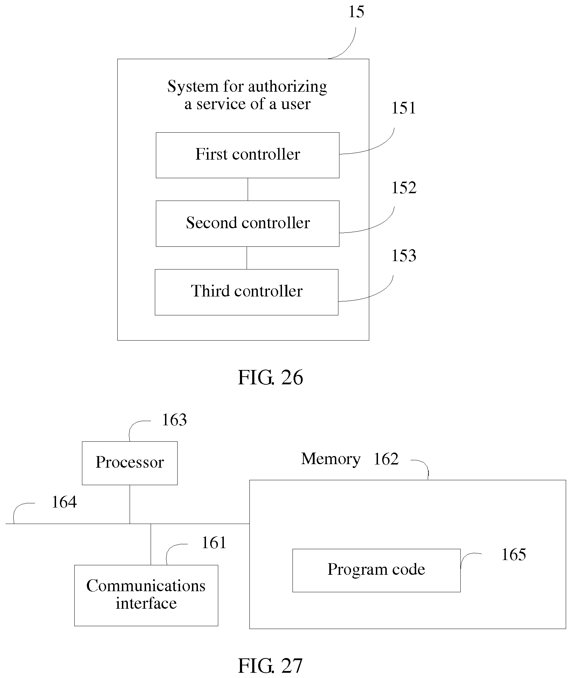

This embodiment of the present invention provides a system 15 for authorizing a service of a user. As shown in FIG. 26, the system 15 includes a first controller 151, a second controller 152, and a third controller 153. The first controller 151 may be the first controller 90 described in Embodiment 10. The second controller 152 may be the second controller 11 described in Embodiment 11. The third controller 153 may be the third controller 12 described in example 12.

### Embodiment 16

A first controller provided in Embodiment 16 can perform the method provided in Embodiment 1. This embodiment of the present invention provides a first controller 16. As shown in FIG. 27, the first controller 16 includes a communications interface 161, a memory 162, and a processor 163. The communications interface 161 is configured to communicate with an external network element. The memory 162 is configured to store program code 165.

The communications interface 161, the memory 162, and the processor 163 are connected to and communicate with each other by using a bus 164.

The processor 163 is configured to invoke the program code stored in the memory 162, to perform the following method:
obtaining an identifier of a user and an identifier of a first gateway, where the first gateway is a gateway of a network accessed by the user; and
obtaining service information, where the service information is information about a service subscribed by the user.

The processor 163 sends a first request to a second controller by using the communications interface 161. The first request includes the service information, and the first request is used to instruct the second controller to generate a virtualized network function VNF corresponding to the service information.

The processor 163 receives, by using the communications interface 161, a first response sent by the second controller. The first response includes an identifier of a transport network, and the identifier of the transport network is used to identify a transport network that is in a data center DC and that is allocated to the user.

The processor 163 sends a second request to a third controller by using the communications interface 161. The second request includes the identifier of the user, the identifier of the first gateway, and the identifier of the transport network. The second request is used to instruct the third controller to configure a path used to transmit data. The data is data that needs to be sent by the user to the VNF corresponding to the service information.

Optionally, the first response further includes an identifier of a second gateway, and the second gateway is a gateway of the DC; and
the second request further includes the identifier of the second gateway.

For example, the processor 163 receives, by using the communications interface 161, a notification message sent by the first gateway. The notification message includes the identifier of the user and the identifier of the first gateway. The notification message is used to notify the first controller that the user accesses the network.

The processor 163 invokes the program code stored in the memory 162, to perform the following method:
obtaining the identifier of the user and the identifier of the first gateway from the notification message; and
obtaining the service information from the notification message.

For example, the processor 163 receives, by using the communications interface 161, a first authentication request sent by the first gateway. The first authentication request includes the identifier of the user and the identifier of the first gateway. The first authentication request is used to request an authentication, authorization and accounting AAA server to authenticate an identity of the user.

The processor 163 is configured to invoke the program code stored in the memory 162, to perform the following method:
obtaining the identifier of the user and the identifier of the first gateway from the first authentication request.

The processor 163 sends a second authentication request to the AAA server by using the communications interface 161. The second authentication request includes the identifier of the user and the identifier of the first gateway. The second authentication request is used to request the authentication, authorization and accounting AAA server to authenticate the identity of the user. The processor 163 receives, by using the communications interface 161, an authentication success response sent by the AAA server. The authentication success response includes the service information, the identifier of the user, and information used to indicate that the user accesses the network. The authentication success response is used to notify the first gateway that identity authentication for the user succeeds.

The processor 163 is configured to invoke the program code stored in the memory 162, to perform the following method:
obtaining the service information from the authentication success response.

For example, the processor 163 is configured to invoke the program code stored in the memory 162, to perform the following method:
obtaining a first correspondence from a preset server according to an external instruction or a preset period, where the first correspondence includes the identifier of the user and the identifier of the first gateway, and the preset server is configured to store the first correspondence;
obtaining the identifier of the user and the identifier of the first gateway from the first correspondence; and
obtaining the service information according to the identifier of the user and a prestored second correspondence, where the second correspondence includes the service information and the identifier of the user.

### Embodiment 17

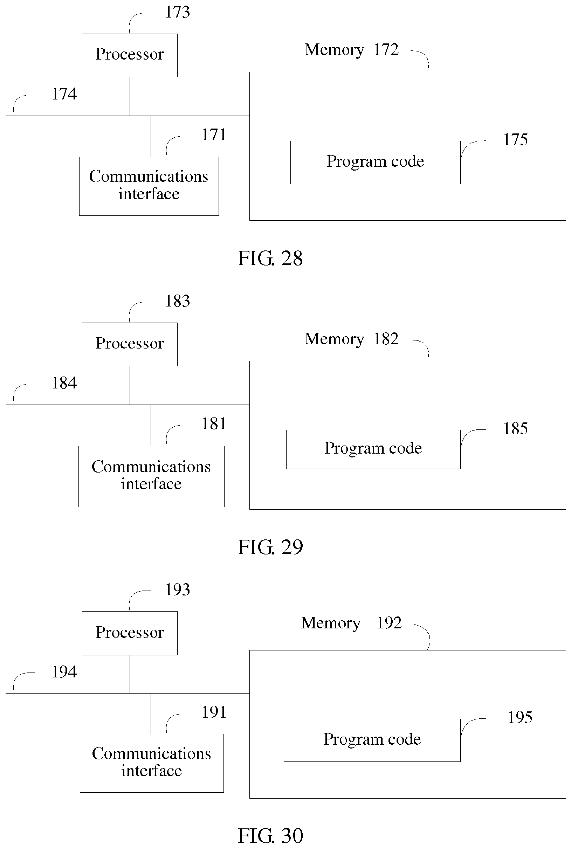

A second controller provided in Embodiment 17 can perform the method provided in Embodiment 2. This embodiment of the present invention provides a second controller 17. As shown in FIG. 28, the second controller 17 includes a communications interface 171, a memory 172, and a processor 173.

The communications interface 171 is configured to communicate with an external network element. The memory 172 is configured to store program code 175.

The communications interface 171, the memory 172, and the processor 173 are connected to and communicate with each other by using a bus 174.

The processor 173 receives, by using the communications interface 171, a first request sent by a first controller. The first request includes service information, the service information is information about a service subscribed by a user, and the first request is used to instruct the second controller to generate a virtualized network function VNF corresponding to the service information.

The processor 173 is configured to invoke the program code stored in the memory 172, to perform the following method:
generating, according to the service information, the VNF corresponding to the service information; and
allocating an identifier of a transport network to the user, where the identifier of the transport network is used to identify a transport network that is in a data center DC and that is allocated to the user.

The processor 173 sends a first response to the first controller by using the communications interface 171. The first response includes the identifier of the transport network.

The processor 173 is configured to invoke the program code stored in the memory 172, to perform the following method:
obtaining an identifier of a gateway according to the VNF, where the gateway is a gateway of the DC to which the VNF belongs.

The processor 173 sends the identifier of the gateway to the first controller by using the communications interface 171 and the first response.

### Example 18

A third controller provided in an example 18 helpful for understanding the invention can perform the method provided in example 3. This embodiment of the present invention provides a third controller 18. As shown in FIG. 29, the third controller 18 includes a communications interface 181, a memory 182, and a processor 183.

The communications interface 181 is configured to communicate with an external network element. The memory 182 is configured to store program code 185.

The communications interface 181, the memory 182, and the processor 183 are connected to and communicate with each other by using a bus 184.

The processor 183 receives, by using the communications interface 181, a second request sent by a first controller. The second request includes an identifier of a user, an identifier of a first gateway, and an identifier of a transport network. The second request is used to instruct the third controller to configure a path used to transmit data. The data is data that needs to be sent by the user to a virtualized network function VNF corresponding to service information. The service information is information about a service subscribed by the user. The first gateway is a gateway of a network accessed by the user. The identifier of the transport network is used to identify a transport network that is in a data center DC and that is allocated to the user.

The processor 183 is configured to invoke the program code stored in the memory 182, to perform the following method:
generating configuration information according to the second request, where the configuration information is information that is required by a gateway set for configuring the path used to transmit data, the gateway set is a set of gateways through which the path passes, and the configuration information includes the identifier of the user and the identifier of the transport network.

The processor 183 sends the configuration information to the gateway set by using the communications interface 181.

For example, the gateway set is the first gateway, and the path is a path between the first gateway and the VNF

For example, the second request further includes an identifier of a second gateway, the second gateway is a gateway of the DC, and the configuration information includes first configuration information and second configuration information. The processor 183 is configured to invoke the program code stored in the memory 182, to perform the following method:
generating the first configuration information according to the identifier of the user and the identifier of the second gateway that are included in the second request, where the first configuration information is information that is required by the first gateway for configuring a first subpath, and the first subpath is a path that is between the first gateway and the second gateway and that is used to transmit the data; and
generating the second configuration information according to the identifier of the transport network that is included in the second request, where the second configuration information is information that is required by the second gateway for configuring a second subpath, the second subpath is a path that is between the second gateway and the VNF and that is used to transmit the data, and the path includes the first subpath and the second subpath. The processor 183 sends the first configuration information to the first gateway by using the communications interface 181.

The processor 183 sends the second configuration information to the second gateway by using the communications interface 181.

### Embodiment 19

A first gateway provided in Embodiment 19 can perform the method provided in Embodiment 4. A second controller in Embodiment 19 is the third controller in example 3 or example 12. The present invention provides a first gateway 19. As shown in FIG. 30, the first gateway 19 includes a communications interface 191, a memory 192, and a processor 193.

The communications interface 191 is configured to communicate with an external network element. The memory 192 is configured to store program code 195.

The communications interface 191, the memory 192, and the processor 193 are connected to and communicate with each other by using a bus 194.

The processor 193 receives an access request of a user by using the communications interface 191. The access request includes an identifier of the user.

The processor 193 sends a first message to a first controller by using the communications interface 191. The first gateway is a gateway of a network accessed by the user. The first message includes the identifier of the user and an identifier of the first gateway.

The processor 193 receives, by using the communications interface 191, configuration information sent by a second controller. The configuration information is information that is required by the first gateway for configuring a path used to transmit data. The data is data that needs to be sent by the user to a virtualized network function VNF corresponding to service information. The service information is information about a service subscribed by the user. The configuration information includes the identifier of the user and an identifier of a transport network. The identifier of the transport network is used to identify a transport network that is in a data center DC and that is allocated to the user.

The processor 193 is configured to invoke the program code stored in the memory 192, to perform the following method:
obtaining a correspondence according to information about the user, the identifier of the first gateway, and the identifier of the transport network, where the correspondence includes the information about the user and information about the path, the information about the path includes the identifier of the first gateway and the identifier of the transport network, and the path is a path between the first gateway and the VNF corresponding to the service information.

For example, the first message is a notification message, the notification message includes the identifier of the user and the identifier of the first gateway, and the notification message is used to notify the first controller that the user accesses the network. Alternatively, the first message is an authentication request, the authentication request includes the identifier of the user and the identifier of the first gateway, and the authentication request is used to request an authentication, authorization and accounting AAA server to authenticate an identity of the user.

For example, the processor 193 receives a packet from the user by using the communications interface 191. The packet from the user includes the identifier of the user and the data that needs to be sent by the user to the VNF corresponding to the service information.

The processor 193 is configured to invoke the program code stored in the memory 192, to perform the following method:
obtaining the information about the path according to the identifier of the user and the correspondence.

The processor 193 sends the packet from the user to the VNF according to the information about the path by using the communications interface 191 and the path.

### Embodiment 20

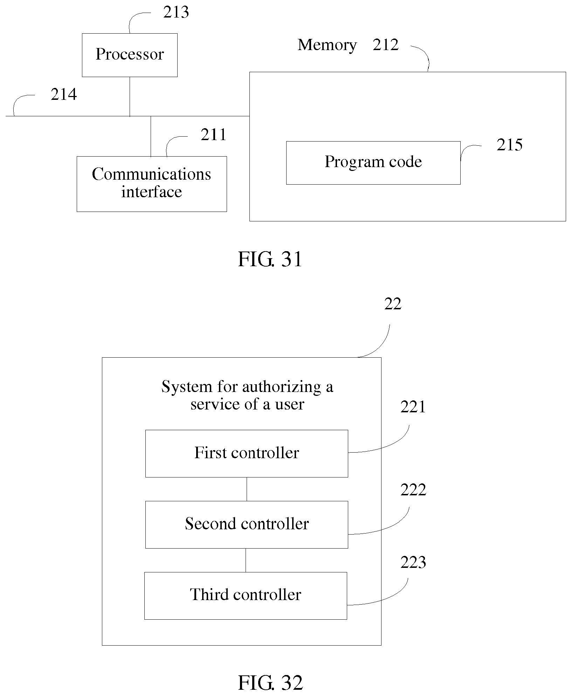

A first gateway provided in Embodiment 20 can perform the method provided in Embodiment 5. A second controller in Embodiment 20 is the third controller in example 3 or example 12. Configuration information in Embodiment 20 is the first configuration information in example 3 or example 12. A subpath in Embodiment 20 is the first subpath in example 3 or example 12. This embodiment of the present invention provides a first gateway 21. As shown in FIG. 31, the first gateway 21 includes a communications interface 211, a memory 212, and a processor 213.

The communications interface 211 is configured to communicate with an external network element. The memory 212 is configured to store program code 215.

The communications interface 211, the memory 212, and the processor 213 are connected to and communicate with each other by using a bus 214.

The processor 213 receives an access request of a user by using the communications interface 211. The access request includes an identifier of the user.

The processor 213 sends a first message to a first controller by using the communications interface 211. The first gateway is a gateway of a network accessed by the user. The first message includes the identifier of the user and an identifier of the first gateway.

The processor 213 receives, by using the communications interface 211, configuration information sent by a second controller. The configuration information is information that is required by the first gateway for configuring a subpath used to transmit data. The data is data that needs to be sent by the user to a virtualized network function VNF corresponding to service information. The service information is information about a service subscribed by the user. The configuration information includes the identifier of the user and an identifier of a second gateway. The second gateway is a gateway of a data center DC.

The processor 213 is configured to invoke the program code stored in the memory 212, to perform the following method:
obtaining a correspondence according to the identifier of the user, the identifier of the first gateway, and the identifier of the second gateway, where the correspondence includes the identifier of the user and information about the subpath, the information about the subpath includes the identifier of the first gateway and the identifier of the second gateway, and the subpath is a path between the first gateway and the second gateway.

For example, the first message is a notification message, the notification message includes the identifier of the user and the identifier of the first gateway, and the notification message is used to notify the first controller that the user accesses the network. Alternatively, the first message is an authentication request, the authentication request includes the identifier of the user and the identifier of the first gateway, and the authentication request is used to request an authentication, authorization and accounting AAA server to authenticate an identity of the user.

The processor 213 receives a packet from the user by using the communications interface 211. The packet from the user includes the identifier of the user and the data that needs to be sent by the user to the VNF corresponding to the service information.

The processor 213 is configured to invoke the program code stored in the memory 212, to perform the following method:
obtaining the information about the subpath according to the identifier of the user and the correspondence.

The processor 213 sends the packet from the user to the second gateway according to the information about the subpath by using the communications interface 211 and the subpath.

### Embodiment 21

This embodiment of the present invention provides a system 22 for authorizing a service of a user. As shown in FIG. 32, the system 22 includes a first controller 221, a second controller 222, and a third controller 223.

The first controller 221 may be the first controller 16 described in Embodiment 16. The second controller 222 may be the second controller 17 described in Embodiment 17. The third controller 223 may be the third controller 18 described in example 18.

"First", "second", and "third" in the first controller, the second controller, and the third controller in the embodiments of the present invention are used to distinguish different controllers, and are not used to indicate a sequence of the controllers. "First" and "second" in the first gateway and the second gateway in the embodiments of the present invention are used to distinguish different gateways, and are not used to indicate a sequence of the gateways.

The foregoing descriptions about implementations allow a person skilled in the art to clearly understand that, for the purpose of convenient and brief description, division of the foregoing function modules is merely used as an example for illustration. In actual application, the foregoing functions may be allocated to different function modules and implemented according to a requirement, that is, an inner structure of an apparatus is divided into different function modules to implement all or some of the functions described above. For a detailed working process of the described system, apparatus, and unit, refer to a corresponding process in the foregoing method embodiments. Details are not repeatedly described herein.

In the several embodiments provided in this application, it should be understood that the disclosed system, apparatus, and method may be implemented in another manner. For example, the described apparatus embodiment is merely an example. For example, the module or unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may be or may not be physically separate, and the parts displayed as units may be or may not be physical units, that is, may be located in one location, or may be distributed on multiple network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention as defined by the claims attached hereto.

## Claims

1. A first controller (90, 151, 221), wherein the first controller comprises:
a first obtaining unit (901), configured to obtain an identifier of a user and an identifier of a first gateway of a network accessed by the user;
a second obtaining unit (902), configured to obtain service information according to the identifier of the user and a prestored second correspondence, wherein the service information is information about a service subscribed by the user and the second correspondence comprises the service information and the identifier of the user;
a first sending unit (903), configured to send a first request to a second controller (11, 152, 222), wherein the first request comprises the service information, and the first request instructs the second controller to generate a virtualized network function, VNF, corresponding to the service information;
a first receiving unit (904), configured to receive a first response sent by the second controller (11, 152, 222), wherein the first response comprises an identifier of a transport network, and the identifier of the transport network identifies a transport network that is in a data center, DC, and that is allocated to the user; and
a second sending unit (905), configured to send a second request to a third controller (153, 223), wherein the second request comprises the identifier of the user, the identifier of the first gateway (14), and the identifier of the transport network, the second request instructs the third controller to configure a path used to transmit data, and the data is to be sent by the user to the VNF corresponding to the service information.

2. The first controller (90, 151, 221) according to claim 1, wherein the first response further comprises an identifier of a second gateway, the second gateway is a gateway of the DC, and the second request further comprises the identifier of the second gateway.

3. The first controller (90, 151, 221) according to claim 1 or 2, wherein the first controller further comprises a second receiving unit (906);
the second receiving unit (906) is configured to receive a notification message sent by the first gateway, wherein the notification message comprises the identifier of the user and the identifier of the first gateway, and the notification message notifies the first controller (90, 151, 221) that the user accesses the network; and
the first obtaining unit (901) is specifically configured to obtain the identifier of the user and the identifier of the first gateway from the notification message.

4. The first controller (90, 151, 221) according to claim 1 or 2, wherein
the first obtaining unit (901) is specifically configured to obtain a first correspondence from a preset server according to an external instruction or a preset period, wherein the first correspondence comprises the identifier of the user and the identifier of the first gateway (14), and the preset server is configured to store the first correspondence; and
the first obtaining unit (901) is specifically configured to obtain the identifier of the user and the identifier of the first gateway from the first correspondence.

5. The first controller (90, 151, 221) according to claim 1 or 2, wherein the first controller further comprises a third receiving unit (907);
the third receiving unit (907) is configured to receive a first authentication request sent by the first gateway (14), wherein the first authentication request comprises the identifier of the user and the identifier of the first gateway, and the first authentication request is used to request an authentication, authorization and accounting, AAA, server to authenticate an identity of the user; and
the first obtaining unit (901) is specifically configured to obtain the identifier of the user and the identifier of the first gateway from the first authentication request.

6. The first controller (90, 151, 221) according to claim 3, wherein the notification message further comprises the service information, and the second obtaining unit (902) is specifically configured to obtain the service information from the notification message.

7. The first controller (90, 151, 221) according to claim 5, wherein the first controller further comprises:
a third sending unit (908), configured to send a second authentication request to the AAA server, wherein the second authentication request comprises the identifier of the user and the identifier of the first gateway (14), and the second authentication request requests the AAA server to authenticate the identity of the user; and
a fourth receiving unit (909), configured to receive an authentication success response sent by the AAA server, wherein the authentication success response comprises the service information, the identifier of the user, and information indicating that the user accesses the network, and the authentication success response notifies the first gateway that identity authentication for the user succeeds, wherein
the second obtaining unit (136, 146, 902) is specifically configured to obtain the service information from the authentication success response.

8. A system comprising a first controller of any of the previous claims and the second controller (11, 152, 222), wherein the second controller comprises:
a second controller receiving unit (111), configured to receive the first request sent by the first controller (90, 151, 221), wherein the first request comprises, the service information about the service subscribed by the user, and the first request instructs the second controller (11, 152, 222) to generate the virtualized network function, VNF, corresponding to the service information;
a generation unit (112, 122), configured to generate, according to the service information, the VNF corresponding to the service information;
an allocation unit (113), configured to allocate an identifier of a transport network to the user, wherein the identifier of the transport network identifies the transport network that is in the DC and that is allocated to the user; and
a second controller sending unit (114), configured to send the first response to the first controller (90, 151, 221), wherein the first response comprises the identifier of the transport network.

9. The system according to claim 8, wherein the second controller further comprises:
a second controller obtaining unit (115), configured to obtain an identifier of a gateway according to the VNF, wherein the gateway is a gateway of the DC to which the VNF belongs, wherein the second controller sending unit (114) is further configured to send the identifier of the gateway to the first controller (90, 151, 221) by using the first response.

## Patentansprüche

1. Erste Steuerung (90, 151, 221), wobei die erste Steuerung Folgendes umfasst:
eine erste Erlangungseinheit (901), die dafür konfiguriert ist, eine Kennung eines Benutzers und eine Kennung eines ersten Gateways eines Netzwerks, auf das durch den Benutzer zugegriffen wird, zu erlangen,
eine zweite Erlangungseinheit (902), die dafür konfiguriert ist, gemäß der Kennung des Benutzers und einer vorab gespeicherten zweiten Entsprechung Dienstinformationen zu erlangen, wobei die Dienstinformationen Informationen über einen Dienst sind, den der Benutzer abonniert hat, und die zweite Entsprechung die Dienstinformationen und die Kennung des Benutzers umfasst,
eine erste Sendeeinheit (903), die dafür konfiguriert ist, eine erste Anfrage an eine zweite Steuerung (11, 152, 222) zu senden, wobei die erste Anfrage die Dienstinformationen umfasst und die erste Anfrage die zweite Steuerung anweist, eine virtualisierte Netzwerkfunktion, VNF, zu erzeugen, die den Dienstinformationen entspricht,
eine erste Empfangseinheit (904), die dafür konfiguriert ist, eine erste Antwort zu empfangen, die von der zweiten Steuerung (11, 152, 222) gesendet wird, wobei die erste Antwort eine Kennung eines Transportnetzwerks umfasst und die Kennung des Transportnetzwerks ein Transportnetzwerk identifiziert, das sich ein einem Datencenter, DC, befindet und das dem Benutzer zugewiesen ist, und
eine zweite Sendeeinheit (905), die dafür konfiguriert ist, eine zweite Anfrage an eine dritte Steuerung (153, 223) zu senden, wobei die zweite Anfrage die Kennung des Benutzers, die Kennung des ersten Gateway (14) und die Kennung des Transportnetzwerks umfasst, wobei die zweite Anfrage die dritte Steuerung anweist, einen Pfad zu konfigurieren, der dafür verwendet wird, Daten zu übertragen, und die Daten durch den Benutzer entsprechend den Dienstinformationen an die VNF zu senden sind.

2. Erste Steuerung (90, 151, 221) nach Anspruch 1, wobei die erste Antwort ferner eine Kennung eines zweiten Gateway umfasst, das zweite Gateway ein Gateway des DCs ist und die zweite Anfrage ferner die Kennung des zweiten Gateway umfasst.

3. Erste Steuerung (90, 151, 221) nach Anspruch 1 oder 2, wobei die erste Steuerung ferner eine zweite Empfangseinheit (906) umfasst,
wobei die zweite Empfangseinheit (906) dafür konfiguriert ist, eine Mitteilungsnachricht zu empfangen, die von dem ersten Gateway gesendet wird, wobei die Mitteilungsnachricht die Kennung des Benutzers und die Kennung des ersten Gateway umfasst und die Mitteilungsnachricht der ersten Steuerung (90, 151, 221) mitteilt, dass der Benutzer auf das Netzwerk zugreift, und
die erste Erlangungseinheit (901) speziell dafür konfiguriert ist, die Kennung des Benutzers und die Kennung des ersten Gateway aus der Mitteilungsnachricht zu erlangen.

4. Erste Steuerung (90, 151, 221) nach Anspruch 1 oder 2, wobei
die erste Erlangungseinheit (901) speziell dafür konfiguriert ist, eine erste Entsprechung von einem voreingestellten Server gemäß einer externen Anweisung oder einer voreingestellten Zeitspanne zu erlangen, wobei die erste Entsprechung die Kennung des Benutzers und die Kennung des ersten Gateway (14) umfasst und der voreingestellte Server dafür konfiguriert ist, die erste Entsprechung zu speichern, und die erste Erlangungseinheit (901) speziell dafür konfiguriert ist, die Kennung des Benutzers und die Kennung des ersten Gateway aus der ersten Entsprechung zu erlangen.

5. Erste Steuerung (90, 151, 221) nach Anspruch 1 oder 2, wobei die erste Steuerung ferner eine dritte Empfangseinheit (907) umfasst,
wobei die dritte Empfangseinheit (907) dafür konfiguriert ist, eine erste Authentifizierungsanfrage zu empfangen, die von dem ersten Gateway (14) gesendet wird, wobei die erste Authentifizierungsanfrage die Kennung des Benutzers und die Kennung des ersten Gateway umfasst und die erste Authentifizierungsanfrage verwendet wird, um an einem Authentifizierungs-, Autorisierungs- und Abrechnungs-(AAA-)Server nach Authentifizierung einer Identität des Benutzers anzufragen, und die erste Erlangungseinheit (901) speziell dafür konfiguriert ist, die Kennung des Benutzers und die Kennung des ersten Gateway aus der ersten Authentifizierungsanfrage zu erlangen.

6. Erste Steuerung (90, 151, 221) nach Anspruch 3, wobei die Mitteilungsnachricht ferner die Dienstinformationen umfasst und die zweite Erlangungseinheit (902) speziell dafür konfiguriert ist, die Dienstinformationen aus der Mitteilungsnachricht zu erlangen.

7. Erste Steuerung (90, 151, 221) nach Anspruch 5, wobei die erste Steuerung ferner Folgendes umfasst:
eine dritte Sendeeinheit (908), die dafür konfiguriert ist, eine zweite Authentifizierungsanfrage an den AAA-Server zu senden, wobei die zweite Authentifizierungsanfrage die Kennung des Benutzers und die Kennung des ersten Gateway (14) umfasst und die zweite Authentifizierungsanfrage am AAA-Server nach Authentifizierung der Identität des Benutzers anfragt, und
eine vierte Empfangseinheit (909), die dafür konfiguriert ist, eine Authentifizierungserfolgsantwort zu empfangen, die von dem AAA-Server gesendet wird, wobei die Authentifizierungserfolgsantwort die Dienstinformationen, die Kennung des Benutzers und Informationen umfasst, die angeben, dass der Benutzer auf das Netzwerk zugreift, und die Authentifizierungserfolgsantwort dem ersten Gateway mitteilt, dass die Identitätsauthentifizierung des Benutzers erfolgreich war, wobei
die zweite Erlangungseinheit (136, 146, 902) speziell dafür konfiguriert ist, die Dienstinformationen aus der Authentifizierungserfolgsantwort zu erlangen.

8. System, eine erste Steuerung nach einem der vorhergehenden Ansprüche und die zweite Steuerung (11, 152, 222) umfassend, wobei die zweite Steuerung Folgendes umfasst:
eine Empfangseinheit (111) der zweiten Steuerung, die dafür konfiguriert ist, die erste Anfrage zu empfangen, die von der ersten Steuerung (90, 151, 221) gesendet wird, wobei die erste Anfrage die Dienstinformationen über den Dienst umfasst, der von dem Benutzer abonniert wird, und die erste Anfrage die zweite Steuerung (11, 152, 222) anweist, die virtualisierte Netzwerkfunktion, VNF, zu erzeugen, die den Dienstinformationen entspricht,
eine Erzeugungseinheit (112, 122), die dafür konfiguriert ist, gemäß den Dienstinformationen die VNF zu erzeugen, die den Dienstinformationen entspricht,
eine Zuweisungseinheit (113), die dafür konfiguriert ist, dem Benutzer eine Kennung eines Transportnetzwerks zuzuweisen, wobei die Kennung des Transportnetzwerks das Transportnetzwerk identifiziert, das sich in dem DC befindet und das dem Benutzer zugewiesen ist, und
eine Sendeeinheit (114) der zweiten Steuerung, die dafür konfiguriert ist, die erste Antwort an die erste Steuerung (90, 151, 221) zu senden, wobei die erste Antwort die Kennung des Transportnetzwerks umfasst.

9. System nach Anspruch 8, wobei die zweite Steuerung ferner Folgendes umfasst:
eine Erlangungseinheit (115) der zweiten Steuerung, die dafür konfiguriert ist, gemäß der VNF eine Kennung eines Gateway zu erlangen, wobei das Gateway ein Gateway des DC ist, zu dem die VNF gehört, wobei die Sendeeinheit (114) der zweiten Steuerung ferner dafür konfiguriert ist, die Kennung des Gateway mit Hilfe der ersten Antwort an die erste Steuerung (90, 151, 221) zu senden.

## Revendications

1. Premier contrôleur (90, 151, 221), le premier contrôleur comportant :
une première unité (901) d'obtention, configurée pour obtenir un identifiant d'un utilisateur et un identifiant d'une première passerelle d'un réseau auquel accède l'utilisateur ;
une deuxième unité (902) d'obtention, configurée pour obtenir des informations de service d'après l'identifiant de l'utilisateur et une deuxième correspondance pré-stockée, les informations de service étant des informations concernant un service auquel l'utilisateur est abonné et la deuxième correspondance comportant les informations de service et l'identifiant de l'utilisateur ;
une première unité (903) d'émission, configurée pour envoyer une première demande à un deuxième contrôleur (11, 152, 222), la première demande comportant les informations de service, et la première demande donnant comme instruction au deuxième contrôleur de générer une fonction de réseau virtualisée, VNF, correspondant aux informations de service ;
une première unité (904) de réception, configurée pour recevoir une première réponse émise par le deuxième contrôleur (11, 152, 222), la première réponse comportant un identifiant d'un réseau de transport, et l'identifiant du réseau de transport identifiant un réseau de transport qui se trouve dans un centre de données, DC, et qui est attribué à l'utilisateur ; et
une deuxième unité (905) d'émission, configurée pour envoyer une deuxième demande à un troisième contrôleur (153, 223), la deuxième demande comportant l'identifiant de l'utilisateur, l'identifiant de la première passerelle (14), et l'identifiant du réseau de transport, la deuxième demande donnant comme instruction au troisième contrôleur de configurer un chemin utilisé pour transmettre des données, et les données devant être envoyées par l'utilisateur à la VNF correspondant aux informations de service.

2. Premier contrôleur (90, 151, 221) selon la revendication 1, la première réponse comportant en outre un identifiant d'une deuxième passerelle, la deuxième passerelle étant une passerelle du DC, et la deuxième demande comportant en outre l'identifiant de la deuxième passerelle.

3. Premier contrôleur (90, 151, 221) selon la revendication 1 ou 2, le premier contrôleur comportant en outre une deuxième unité (906) de réception ;
la deuxième unité (906) de réception étant configurée pour recevoir un message de notification émis par la première passerelle, le message de notification comportant l'identifiant de l'utilisateur et l'identifiant de la première passerelle, et le message de notification notifiant au premier contrôleur (90, 151, 221) que l'utilisateur accède au réseau ; et
la première unité (901) d'obtention étant spécifiquement configurée pour obtenir l'identifiant de l'utilisateur et l'identifiant de la première passerelle à partir du message de notification.

4. Premier contrôleur (90, 151, 221) selon la revendication 1 ou 2,
la première unité (901) d'obtention étant spécifiquement configurée pour obtenir une première correspondance à partir d'un serveur prédéfini selon une instruction externe ou une période prédéfinie, la première correspondance comportant l'identifiant de l'utilisateur et l'identifiant de la première passerelle (14), et le serveur prédéfini étant configuré pour stocker la première correspondance ; et
la première unité (901) d'obtention étant spécifiquement configurée pour obtenir l'identifiant de l'utilisateur et l'identifiant de la première passerelle à partir de la première correspondance.

5. Premier contrôleur (90, 151, 221) selon la revendication 1 ou 2, le premier contrôleur comportant en outre une troisième unité (907) de réception ;
la troisième unité (907) de réception étant configurée pour recevoir une première demande d'authentification émise par la première passerelle (14), la première demande d'authentification comportant l'identifiant de l'utilisateur et l'identifiant de la première passerelle, et la première demande d'authentification étant utilisée pour demander à un serveur d'authentification, d'autorisation et de comptabilité, AAA, d'authentifier une identité de l'utilisateur ; et
la première unité (901) d'obtention étant spécifiquement configurée pour obtenir l'identifiant de l'utilisateur et l'identifiant de la première passerelle à partir de la première demande d'authentification.

6. Premier contrôleur (90, 151, 221) selon la revendication 3, le message de notification comportant en outre les informations de service, et la deuxième unité (902) d'obtention étant spécifiquement configurée pour obtenir les informations de service à partir du message de notification.

7. Premier contrôleur (90, 151, 221) selon la revendication 5, le premier contrôleur comportant en outre :
une troisième unité (908) d'émission, configurée pour envoyer une deuxième demande d'authentification au serveur d'AAA, la deuxième demande d'authentification comportant l'identifiant de l'utilisateur et l'identifiant de la première passerelle (14), et la deuxième demande d'authentification demandant au serveur d'AAA d'authentifier l'identité de l'utilisateur ; et
une quatrième unité (909) de réception, configurée pour recevoir une réponse d'authentification réussie émise par le serveur d'AAA, la réponse d'authentification réussie comportant les informations de service, l'identifiant de l'utilisateur et des informations indiquant que l'utilisateur accède au réseau, et la réponse d'authentification réussie notifiant à la première passerelle que l'authentification d'identité pour l'utilisateur a réussi,
la deuxième unité (136, 146, 902) d'obtention étant spécifiquement configurée pour obtenir les informations de service à partir de la réponse d'authentification réussie.

8. Système comportant un premier contrôleur selon l'une quelconque des revendications précédentes et le deuxième contrôleur (11, 152, 222), le deuxième contrôleur comportant :
une unité (111) de réception de deuxième contrôleur, configurée pour recevoir la première demande émise par le premier contrôleur (90, 151, 221), la première demande comportant les informations de service concernant le service auquel l'utilisateur est abonné, et la première demande donnant comme instruction au deuxième contrôleur (11, 152, 222) de générer la fonction de réseau virtualisée, VNF, correspondant aux informations de service ;
une unité (112, 122) de génération, configurée pour générer, d'après les informations de service, la VNF correspondant aux informations de service ;
une unité (113) d'attribution, configurée pour attribuer un identifiant d'un réseau de transport à l'utilisateur, l'identifiant du réseau de transport identifiant le réseau de transport qui se trouve dans le DC et qui est attribué à l'utilisateur ; et
une unité (114) d'émission de deuxième contrôleur, configurée pour envoyer la première réponse au premier contrôleur (90, 151, 221), la première réponse comportant l'identifiant du réseau de transport.

9. Système selon la revendication 8, le deuxième contrôleur comportant en outre :
une unité (115) d'obtention de deuxième contrôleur, configurée pour obtenir un identifiant d'une passerelle selon la VNF, la passerelle étant une passerelle du DC auquel appartient la VNF, l'unité (114) d'émission de deuxième contrôleur étant en outre configurée pour envoyer l'identifiant de la passerelle au premier contrôleur (90, 151, 221) en utilisant la première réponse.
